# EUROPÄISCHE PATENTSCHRIFT

(11) **EP 0 785 385 B1**
(45) Veröffentlichungstag und Bekanntmachung des Hinweises auf die Patenterteilung: **02.01.2002**
(21) Anmeldenummer: 96117293.9
(22) Anmeldetag: 28.10.1996
(51) Int. Cl.: F16L 3/26, H02G 3/04, E01C 11/22

(54) **Kabelkanal aus Kunststoff**
Cable ducting made of plastics
Goulotte de câbles en matière plastique

(30) Priorität: 26.10.1995 DE 19539828
(43) Veröffentlichungstag der Anmeldung: 23.07.1997
(60) Teilanmeldung: 00127871.2
(73) Patentinhaber: Braig, Dieter Otto, 70567 Stuttgart (DE); Laux, Ernst-Ulrich, 70193 Stuttgart (DE); Stach, Günther Gerhard, 70192 Stuttgart (DE)
(72) Erfinder: Stach, Günther Gerhard, 70192 Stuttgart (DE)
(74) Vertreter: Hoeger, Stellrecht & Partner

(56) Entgegenhaltungen:
- DE-U- 9 312 432

## Beschreibung

Die Erfindung betrifft einen Kabelkanal aus Kunststoff. Rinnen einrichtungen aus kunststoff, aus denen auch kabelkanäle gefertigt werden können, sind nach der DE-U-9 312 432 bekannt.

Bei erdverlegten Kabelkanälen (z.B. neben Gleiskörpern) muß zunächst ein Graben ausgehoben werden und anschließend ein Sandbett eingebracht werden. Die Anlieferung der schweren Beton- oder Stahlkanäle (bei Beton Deckelgewichte von 13 kg - 51 kg, Troggewichte von 37 kg - 147 kg) erfolgt meist mittels Schienenfahrzeugen oder auch per Lkw. Bei einer Anlieferung der Beton- bzw. Stahlteile sind die Anladungsvorschriften der StVO für Lkw's zu beachten, so daß eine Ausnutzung des vorhandenen Ladevolumens der Fahrzeuge wegen des hohen Stückgewichts der Einzelteile meist nicht möglich ist.
Zur Be- und Entladung der Transportfahrzeuge sowie der Verlegung der Kanäle im Sandbett und auch in aufgeständerter Form, ist maschinelles Hebezeug zwingend erforderlich. Die auf den Transportfahrzeugen montierten Kräne können jeweils nur einen Kabelkanal aufnehmen und in das Sandbett legen, wozu es noch der Hilfe des Verlegetrupps bedarf. Diese sehr aufwendige Methode führt zu langen Bauzeiten und hohen Baukosten. Darüber hinaus muß der jeweilige Schienenweg aus Sicherheitsgründen für den sonstigen Verkehr teilweise gesperrt bleiben. Diese Sperrzeiten führen für den Schienennetzbetreiber zu zusätzlichen Kosten.

Die eigentliche Verlegung der schweren Teile ist ebenfalls sehr kraft- und zeitraubend, da diese nur unter Einsatz von Hilfsmitteln exakt ausgeführt werden kann.
Bei Verwendung von Betonteilen kommt es durch die geringe Elastizität des Materials sehr leicht zu Beschädigungen, wie Bruch, Absplitterung o. ä., damit zu erhöhtem Materialverbrauch, längeren Bau- und Sperrzeiten und somit höheren Kosten.

Weitere Nachteile (insbesondere bei aufgeständerten Kabelkanälen) bei Betonteilen entstehen bei Reparaturarbeiten an bereits verlegten Kanälen (bzw. den darin verlegten Kabeln) sowie beim nachträglichen Einziehen weiterer Kabelstränge. Insbesondere bei den wenig elastischen Deckelteilen besteht erhöhte Bruchgefahr beim Abnehmen und Wiederauflegen.
Das nachträgliche Einziehen neuer Kabel erfordert manuelle oder maschinelle Arbeiten zur Herstellung von Öffnungen für den Kabelein- bzw. austritt.
Im Brückenbereich können zusätzliche Probleme bei der Verlegung, Befestigung, Reparatur und nachträglicher Kabeleinführung auftreten, da häufig mit überlangen Bauteilen und noch höheren Stückgewichten (bis zu 4 Tonnen) gearbeitet wird.

Neben den bereits oben beschriebenen Kosten entstehen zusätzliche Entsorgungskosten für die beschädigten, nicht mehr einsetzbaren Teile.
Der Einsatz von Beton- bzw. Stahlkabelkanälen erfordert eine hohe Anzahl genormter Sonderteile, wie z.B. Umlenkungen von Hindernissen aller Art. Eine Veränderung der Teile vor Ort ist auch unter Einsatz entsprechender Werkzeuge nur sehr schwer möglich und mit zusätzlichen Kosten verbunden.

Die bisher häufig verwendeten obenliegenden Deckel entsprechen nicht mehr den neuesten Anforderungen (z.B. an Schnellbahnstrecken), da sie nicht fest mit dem Trog verbunden sind. Dies kann dazu führen, daß der Deckel durch die Sogwirkung eines vorbeifahrenden Zuges vom Trog hochgerissen wird und ein erhebliches Gefahrenpotential darstellt.

Die Aufgabe der Erfindung ist einen Kabelkanal zu schaffen, der erhebliche Vorteile in Bezug auf Transport, Verlegbarkeit, Handling, Verarbeitbarkeit und der Verbindung untereinander ausweist.
Diese Aufgabe wird erfindungsgemäß durch einen Kabelkanal aus kunststoff gemäß Anspruch 1 und einem Kanalelement aus kunststoff gemäß Anspruch 67 gelöst.

Der Vorteil des erfindungsgemäßen Kabelkanals äußert sich darin, daß die Verlängerung des Trogbodens einen Schutz gegen das Einwachsen von Pflanzen zwischen zwei hintereinander verlegten Trögen bildet.

Weitere vorteilhafte Ausführungsformen sind Gegenstand der Ansprüche 2 bis 66.

Ein erfindungsgemäßer Kabelkanal dient zur Verlegung z.B. von Kabeln, Schrumpfgarnituren und Leitungen sowohl oberirdisch, im Erdreich, in aufgeständerter Form sowie an Bauwerken aller Art.

Mit der Erfindung ist ein Kabelkanal geschaffen, der wesentlich leichter und elastischer ist. Durch diese Eigenschaften verbessern sich seine Verlegbarkeit, seine Beund Verarbeitungsfähigkeit sowie seine Transporteigenschaften. Der so geschaffene Kabelkanal ist sowohl oberirdisch, im Erdbereich, an Bauwerken und aufgeständert verlegbar. Eine oberirdische Verlegung findet in bestimmten Bauphasen statt, aufgeständerte Verlegung wird notwendig bei beengten räumlichen Verhältnissen, z.B. auf Dämmen und in Geländeeinschnitten.

Die Befestigung an Bauwerken ist mit entsprechenden Hilfsmitteln sehr einfach möglich.

Auch eine Verlegung im Erdreich auf unbestimmte Zeit ist möglich.

Da für alle Varianten der gleiche Kabelkanal einsetzbar ist, kann dieses Normteil in allen Verlegungsvarianten eingesetzt werden.

Häufig wird mit einer provisorischen, oberirdischen Verlegung in Bauphasen begonnen. Zu einem späteren Zeitpunkt werden die Kabelkanäle in ihren endgültigen Verlegezustand (erdverlegt, aufgeständert und an Bauwerken) überführt.

Dieses läßt sich insbesondere durch das niedrige Gewicht der Bauteile zeitsparend und ohne Einsatz von Hebezeugen durchführen.

Durch die Verwendung verschiedener Kunststoffe kann individuell auf die besonderen Anforderungen eingegangen werden, die an den Kabelkanal gestellt werden.

Der Einsatz neuwertiger Kunststoffe empfiehlt sich bei hohen statischen Belastungen, recyceltes oder gemischtes Material findet demgegenüber bei entsprechend niedrigeren Ansprüchen in diesem Bereich Anwendung. Allen eingesetzten Kunststoffen ist vorzugsweise gemeinsam, daß sie recycelbar sind.

Die Herstellung der Einzelteile des Kanals (mit Ausnahme des Ständers) kann - abhängig von der Belastung und damit den notwendigen Wandstärken - zweckmäßigerweise entweder im Spritzguß- oder im Thermoplastschaumguß-Verfahren (TSG) erfolgen.

Der Ständer kann neben diesen Verfahren beispielsweise auch extrudiert werden.

Für alle anderen Teile empfiehlt sich vorteilhafterweise die Anwendung des Spritzguß- bzw. TSG-Verfahrens, da die individuelle und auch technisch anspruchsvolle Formgebung bereits in einem Produktionsschritt sichergestellt ist. Würde man diese Teile extrudieren, müßte die individuelle Formgebung in nachgelagerten Produktionsschritten wie z. B. Kleben, Schweißen, Bohren, Schneiden usw. arbeits- und kostenintensiv vorgenommen werden.

Neben den bisher beschriebenen Normteilen bei Trog (s. Fig. 1,2) und Deckel (s. Fig. 5,6,7) können auch Sonderteile, wie horizontale Umlenker (s. Fig. 16,17) und vertikale Absenker (s. Fig. 18) und Anheber (s. Fig. 19) eingesetzt werden, um Richtungsänderungen unter Berücksichtigung von Geländestrukturen zu ermöglichen. Diese Sonderteile besitzen die spezielle Eigenschaft, daß sie bereits in der Herstellung in einem bestimmten Winkel horizontal oder vertikal geknickt wurden, wobei die Öffnung des Troges grundsätzlich nach oben zeigt.

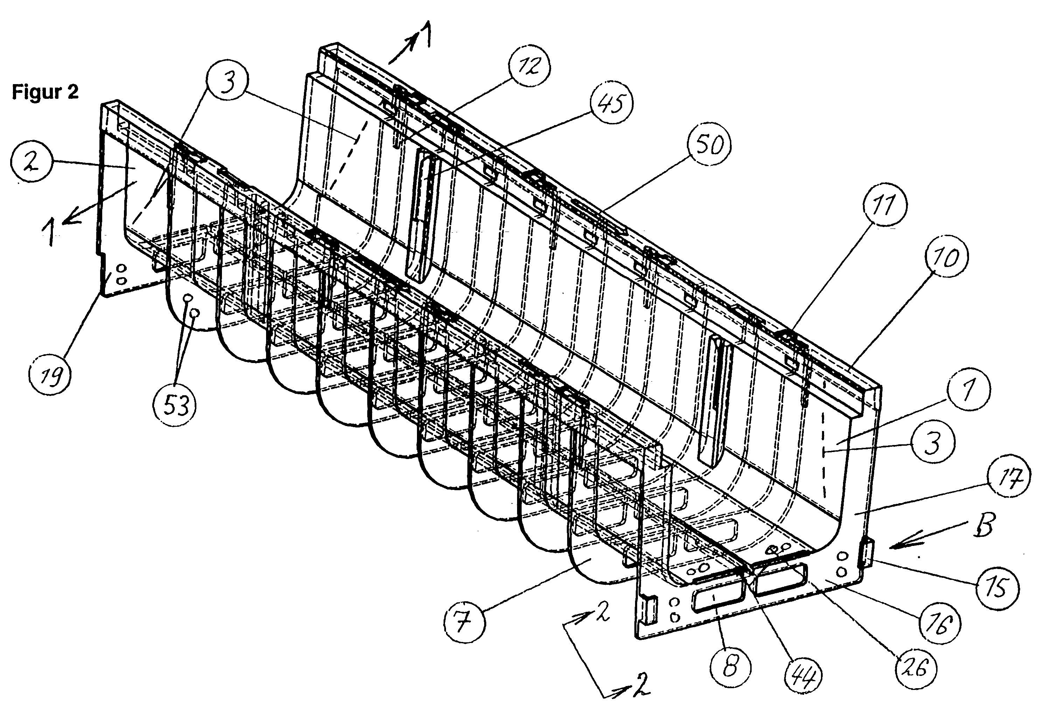

Sollten besondere Geländestrukturen den Einsatz der oben beschriebenen Normteile und Sonderteile nicht ermöglichen, so können die Tröge zweckmäßigerweise anhand der vom Trogauflager (55) in beliebig festlegbaren Winkeln ausgehenden Trennführungslinien (3) (s. Fig. 2) auf der Innenseite (1) bzw. Außenseite (2) der Trogwandungen vor Ort individuell verkürzt werden.

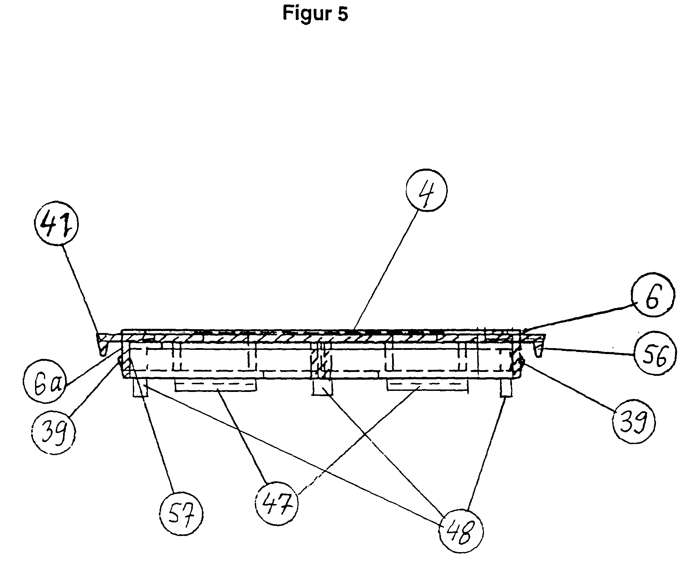

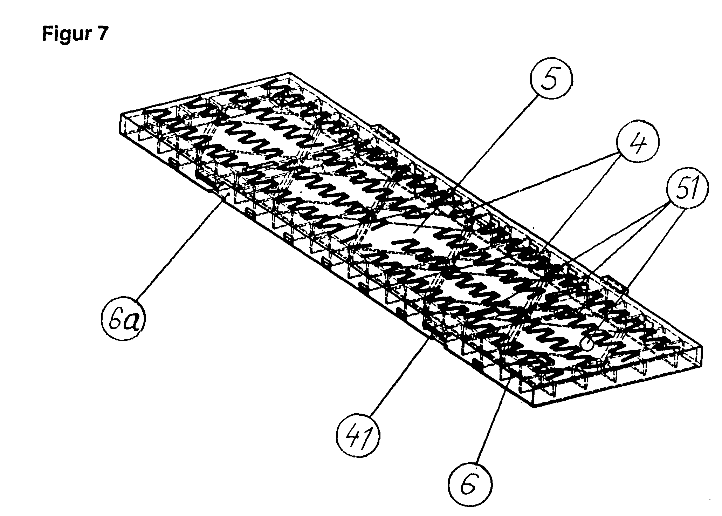

Trennführungslinien (4) befinden sich auch auf der Oberseite des Deckels (5) (s. Fig. 7) und verlaufen in beliebig festlegbaren Winkeln von der Deckelaußenkante (6) (s. Fig. 5, 7).

Die Veränderung der Teile erfolgt durch Schneiden bzw. Sägen entlang der oder parallel zu den Trennführungslinien (3) und (4) nach Maßgabe der Topographie.

Die vorgegebenen Trennführungslinien (3) und (4) verkürzen Planungs- und Ausführungszeiten bei der Verlegung der Kanäle.

Besonders von Vorteil ist eine Auswölbung der Trennführungslinien (4) auf der Oberseite des Deckels (5). Durch den beliebig festlegbaren Abstand der Trennführungslinien (4) zueinander und die Auswölbung nach oben wird die Rutschfestigkeit beim Betreten des Deckels beträchtlich erhöht (s. Fig. 7).

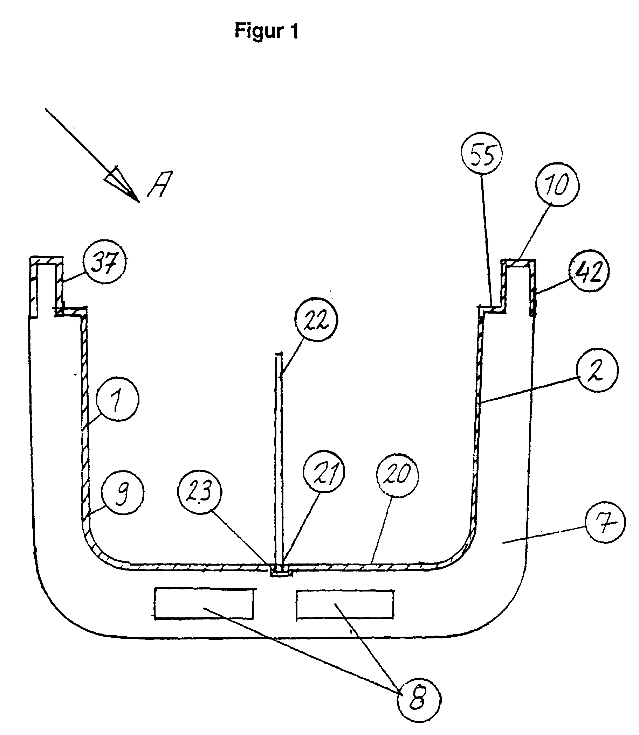

Zur Erzielung einer besseren statischen Belastbarkeit des Troges besitzt dieser an seinen Außenwandungen (2) mehrere, den Trog zumindest teilweise umschließende Querrippen (7) (s. Fig. 1, 2).

Die Trogwandungen (9) (s. Fig. 1) können deshalb relativ dünn gehalten werden, wodurch der Materialeinsatz und das Gewicht niedrig gehalten werden. Somit kann der Trog besser und schneller verlegt werden.

Die Aussparungen (8) in den Querrippen (7) ermöglichen den Wasserfluß in Längsrichtung zum Trog (s. Fig. 1, 2). Zusätzliche Hilfsmittel zur Verbesserung der Drainagewirkung unterhalb des Troges können somit entfallen.

Die Querrippen (7) verbessern auch die Lagestabilität des Troges in Verlegerichtung, so daß ein Verrutschen der Kanäle beim Einzug der Kabel verhindert wird. Dieses ist besonders bei oberirdischer Verlegung von Bedeutung.

Bei dieser Verlegeform muß selbstverständlich auch ein seitliches Verrücken der Tröge verhindert werden.

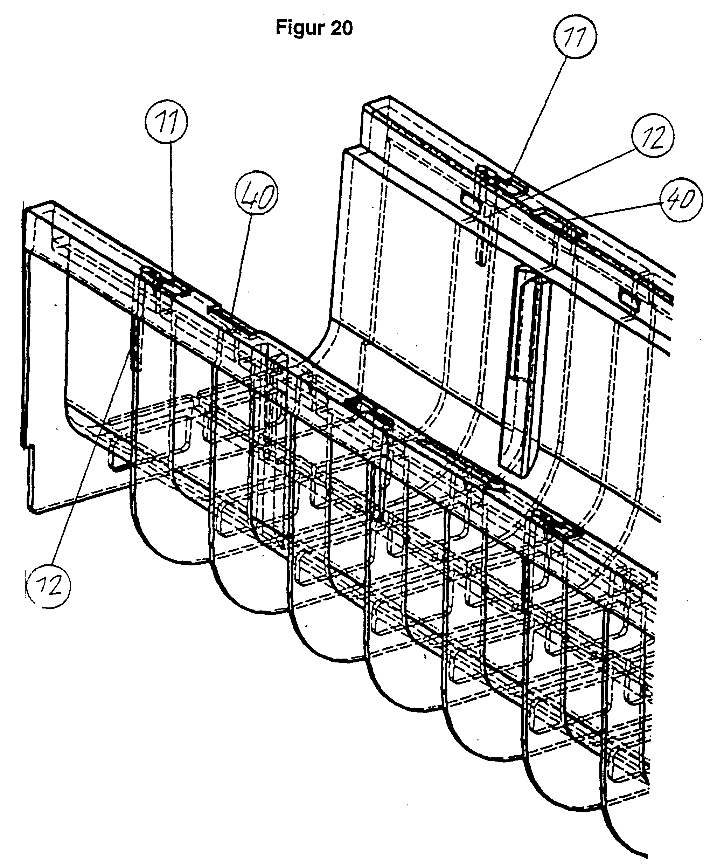

Hierbei sind die an der verbreiterten Trogoberkante (10) (s. Fig. 1, 2) eines erfindungsgemäßen Beispiels vorgesehenen Öffnungen mit Sicherungsclips (11) (s. Fig. 2, 20) sowie die darunter befindlichen Führungshilfen (12), die beispielsweise an den Querrippen (7) (s. Fig. 2, 20) angebracht sind, von besonderem Nutzen.

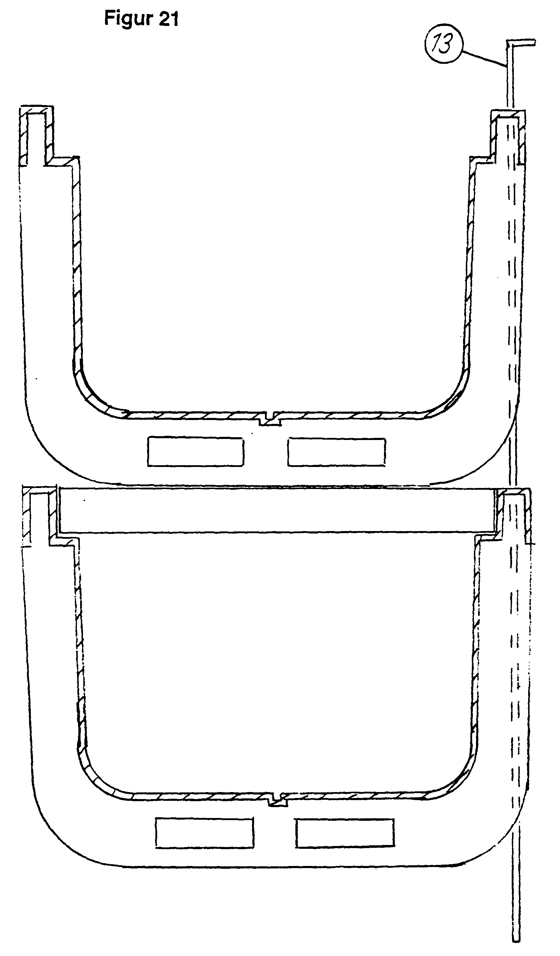

Durch die Öffnungen können entsprechende Befestigungselemente (13) in das Erdreich eingeschlagen und der Trog somit fixiert werden. Die Befestigungselemente (13) sind in diesem Teil zweckmäßiger Weise kürzer zu wählen, als bei der in Figur 21 dargestellten Variante.

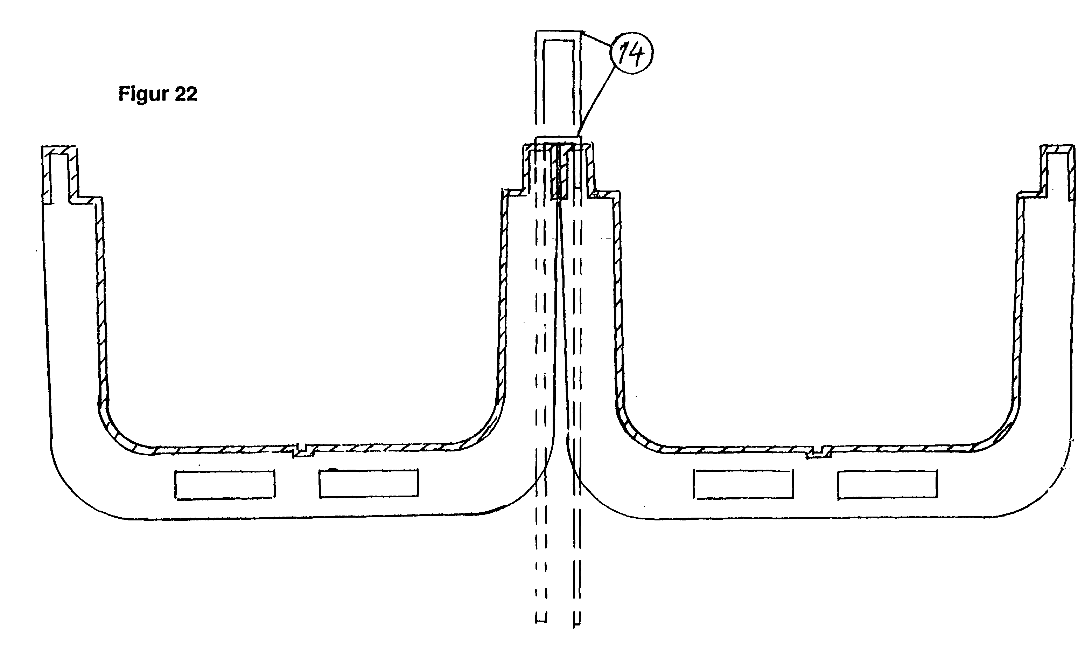

Da die Führungshilfen (12) vorzugsweise an den Querrippen (7) außerhalb des Troges angebracht sind, kommen die Befestigungselemente (13, 14) (s. Fig. 21, 22) mit den im Trog verlegten stromführenden Kabeln nicht in Berührung, so daß Kurzschlüsse ausgeschlossen sind.
Sollte der oberirdisch verlegte Kabelkanal seitlich verschoben werden müssen, kann das Befestigungselement (13), auch bei bereits verlegten Kabeln, leicht aus dem Erdreich entfernt werden und dann erneut eingeschlagen werden.
Diese Befestigungsmethode verhindert auch das unerwünschte selbständige Anheben der Tröge z. B. bei Frost.

Außerdem wird durch diese Vorrichtungen bei Verwendung der entsprechenden Befestigungs-elemente auch die Verbindung von nebeneinander (14) (s. Fig. 22) und übereinander (13) (s. Fig. 21) liegenden Trögen ermöglicht.

Um eine sinnvolle Verbindungsmöglichkeit zwischen zwei hintereinander liegenden erfindungsgemäßen Trögen zu schaffen, wurde ein Schloßsystem (15) (s. Fig. 2, 3, 4) konzipiert, das durch eine spezielle, in ihrer Höhe, gemessen an der Seitenhöhe des Troges, variable Endrippenausprägung an nur einem Trogende (16) (s. Fig. 2) charakterisiert ist.

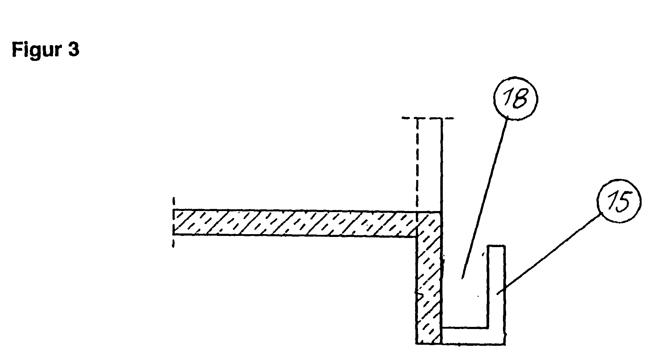

Betrachtet man die Endrippe (17) (s. Fig. 2) einer Trogseite von oben, so kann das Schloß (15) (s. Fig. 2, 3) als liegendes U-Profil bezeichnet werden, da es nach oben, unten und zum Trog hin geöffnet ist.

Die Öffnungsbreite (18) (s. Fig. 3) des Schloßsystems (15) ist größer als die Dicke der einzuführenden Endrippe (19) (s. Fig. 2) des nächsten Troges.

Die Öffnungstoleranzen im Schloß gewährleisten eine gewisse Flexibilität für horizontale und vertikale Richtungsänderungen bei in das Schloß (15) eingehängten Trögen. Die Flexibilität kann noch erhöht werden, wenn die Endrippe (19) nur auf einer Seite in das Schloß (15) eingeführt wird.

Dies hat den Vorteil, daß der Verlauf der Kabelkanäle auch polygonartig erfolgen kann.

Die dreiseitige Öffnung des Schloßsystems (15) (s. Fig. 3) ist besonders vorteilhaft, da die Ablagerung von Sand und Steinen weitgehend verhindert wird. Sollten sich doch kleine Ablagerungen bilden, können diese dann leicht entfernt werden.
Der besondere Vorteil dieses speziellen Schloßsystems liegt in der Möglichkeit des Verzichts auf zusätzliche, eigenständige Verbindungselemente (z. B. Stecker) und Werkzeuge zu deren Entfernung.

Ein weiterer Vorteil besteht in der leichten Austauschbarkeit einzelner, z. B. beschädigter Kabelkanäle aus dem verlegten Verbund.

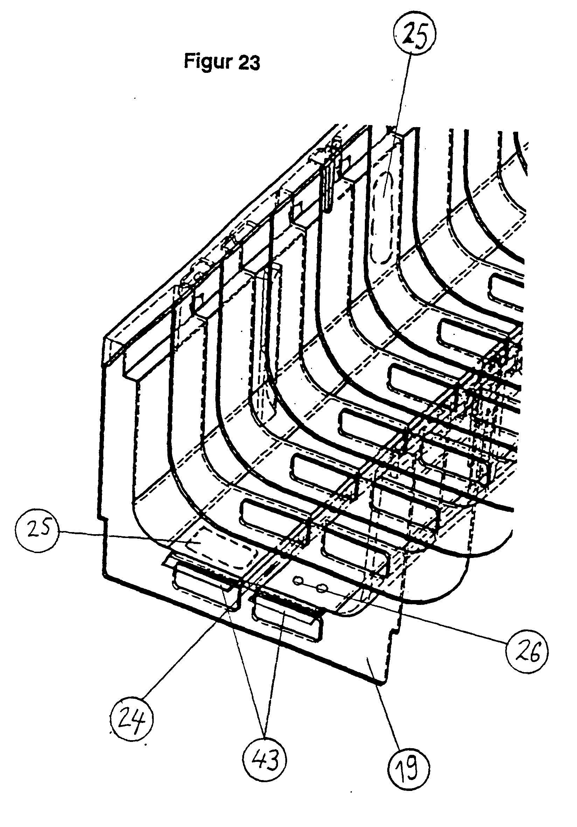

Aus der Konstruktion und Anordnung des Schloßsystems (15) (s. Fig. 2) sowie der Verlängerung des Trogbodens (43) (s. Fig. 23) ergibt sich automatisch die richtige Anordnung zweier hintereinander zu verlegender Tröge.

Eine weitere Erleichterung bei der Verlegung des Kabelkanalsystems bieten die beispielsweise auf der verbreiterten Trogoberkante (10) angebrachten Pfeile (50), die die Verlegerichtung nochmals anzeigen (s. Fig. 2).

Die im Trogboden (20) (s. Fig. 1) ungefähr in Längsrichtung verlaufende Einkerbung (21) (s. Fig. 1) dient, falls nötig, der Befestigung von Trennelementen (22) (s. Fig. 1) und ermöglicht somit eine getrennte Führung der Kabelstränge, wodurch die Übersichtlichkeit und der spätere Zugang zu bestimmten Kabeln beträchtlich erhöht wird.

Durch die Verwendung beispielsweise mehrerer Trennelemente (22) in einem Trog in Reihe ist sichergestellt, daß die Trennelemente bei allen verwendeten Norm- und Sonderteilen einsetzbar sind.
Darüber hinaus ist es auch möglich, die Trennelemente (22) in individuell nachträglich veränderte Tröge einzubauen.

Vorzugsweise im Boden (23) der Einkerbung (21) (s. Fig. 1) befinden sich Durchbrüche (24) (s. Fig. 23), die den Abfluß eventuell eingedrungenen Wassers ermöglichen.

An den Trogwandungen (9) und am Boden des Troges (20) sind beispielsweise perforierte Ausbruchstellen (25) (s. Fig. 23) vorgesehen, damit ein nachträgliches Einziehen bzw. der Anschluß weiterer Kabel ohne Bearbeitung des Troges mit Schneidewerkzeugen durch beide Trogwandungen (9) und den Boden (20) möglich ist.

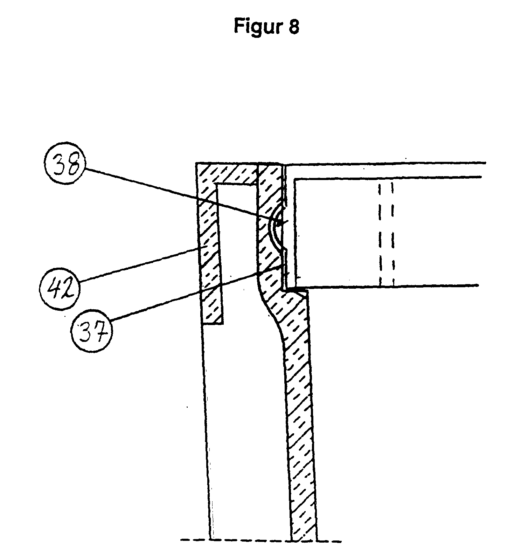

Vorzugsweise ist ein Deckel (s. Fig. 5, 6, 7) mit einem Schnappverschlußsystem (s. Fig. 2, 5, 6, 7, 8) an dem Trog fixiert (s. Fig. 2, 8). Bei einem erfindungsgemäßen Beispiel eines derartigen Schnappverschlußsystems verläuft parallel und unterhalb der Trogoberkante (10), auf einer oder beiden versetzten Innenwandungen (37) des Troges, nicht unbedingt über dessen gesamte Länge, ein konkaver Kreisabschnitt (38) (s. Fig. 8), der zusammen mit einem oder mehreren konvexen Kreisabschnitten (39) (s. Fig. 5) an den Außenseiten des Deckels (6a) (s. Fig. 5, 7) das Schnappverschlußsystem bildet.

Die Aussparungen (40) (s. Fig. 20) in der Verbreiterung der Trogoberkante (10) eines erfindungsgemäßen Beispiels bilden horizontale Auflager für die entsprechenden beispielsweise hakenförmig geformten Profile (41) an den Deckelaußenseiten (6a) (s. Fig. 5, 7).

Die ungefähr vertikale Verlängerung der Trogoberkante nach unten (42) (s. Fig. 1, 8) schützt die nicht unbedingt über die gesamte Breite der Trogoberkante (10) verlaufende Aussparung (40) vor Verschmutzungen durch das Erdreich.

Dieses Klammerverschlußsystem (s. Fig. 5, 7, 20) ist einerseits leicht zu verschließen und auch wieder zu öffnen, andererseits verhindert es wirkungsvoll ein ungewolltes Abheben des Deckels durch äußere Einflüsse wie z. B. den Sog von mit hoher Geschwindigkeit vorbeifahrender Fahrzeuge.

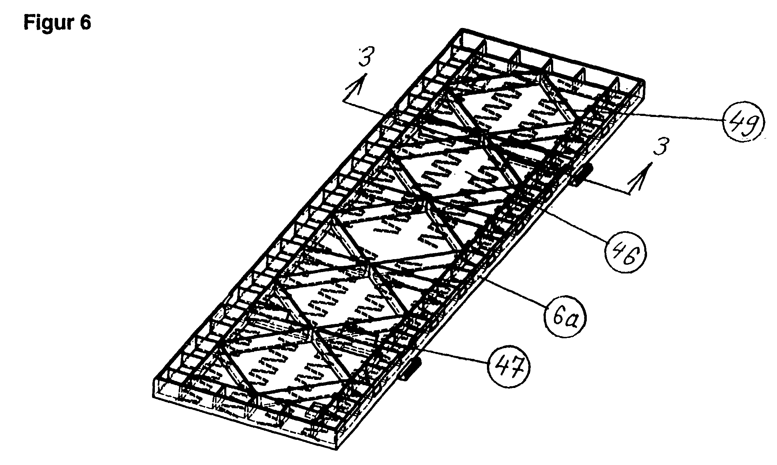

Besonders zweckmäßig erscheint die Aufbewahrungsmöglichkeit des Deckels innerhalb des Troges während der Bau- bzw. Verlegezeiten Hierzu wurden sinnvollerweise Schienen (45) an der Troginnenwandung (1) angebracht (s. Fig. 2). Ein erfindungsgemäßes Ausführungsbeispiel des Deckels besitzt an der Deckelunterseite (46) entsprechend geformte Ausprägungen (47), die ein Einhängen des Deckels im Trog leicht und sicher ermöglichen (s. Fig. 5, 6).

Dieses System verhindert das Wegfliegen der Deckel infolge von Sogwirkungen vorbeifahrender Fahrzeuge.

Das Abbrechen dieser Ausprägungen (47) (s. Fig. 5) beim Transport und der Lagerung wird beispielsweise durch punktuelle Erhöhungen (48) (s. Fig. 5) an der Deckelunterseite (46) auf mindestens die gleiche Höhe wie die Ausprägungen (47) wirksam verhindert (s. Fig. 6).

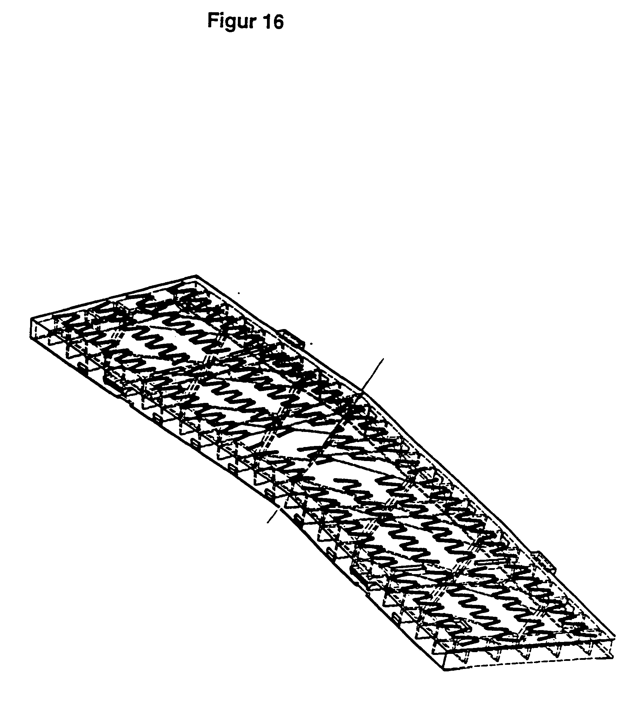

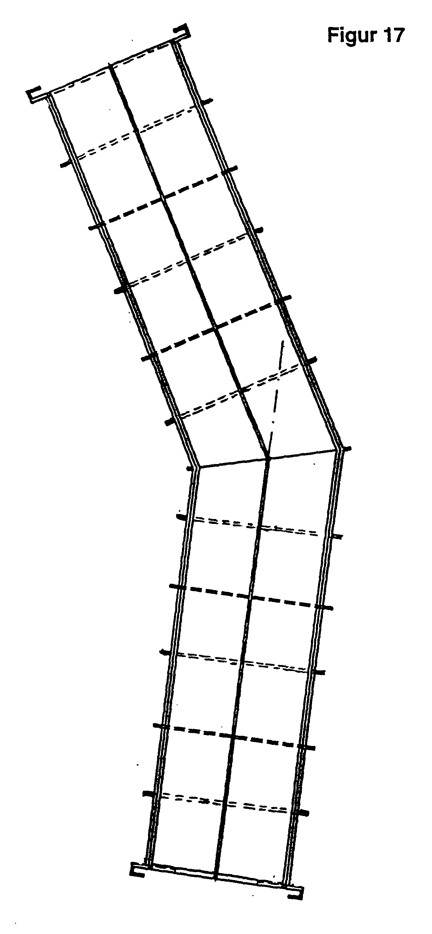

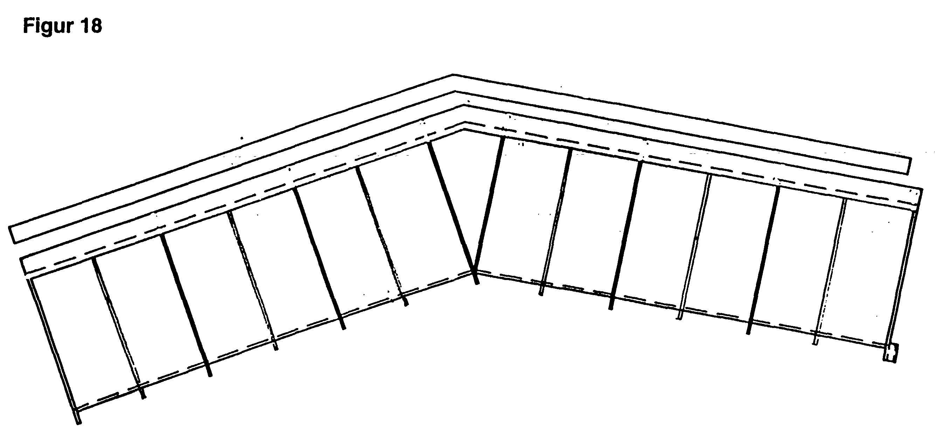

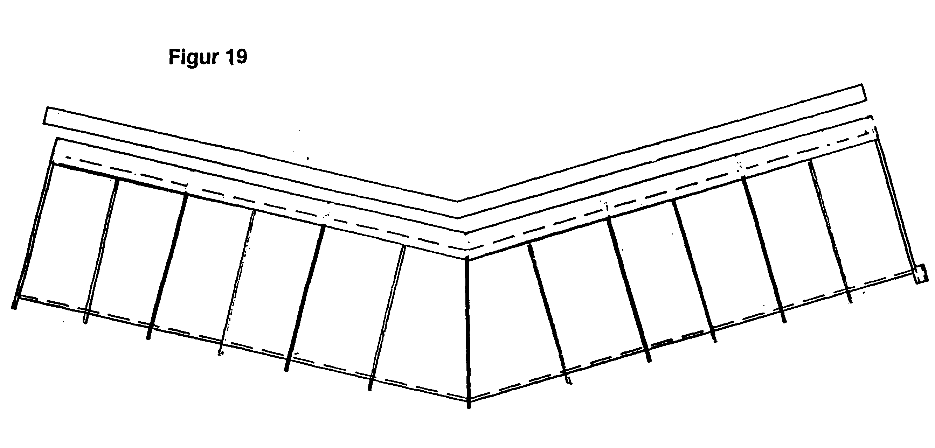

Für die horizontal (s. Fig. 17) und vertikal (s. Fig. 18, 19) abgewinkelten Tröge sind entsprechende Deckelvarianten (s. Fig. 16) als Sonderteile konzipiert und bilden somit ein System.

Sollten besondere Gegebenheiten eine individuelle Gestaltung der Deckelteile erfordern, so kann eine Verkürzung leicht anhand der auf dem Deckel befindlichen Trennführungslinien (4) vorgenommen werden (s. Fig. 7).

Um einen Wärmestau im Trog zu verhindern, sind zweckmäßigerweise im Deckel Belüftungsöffnungen (51) zur Verbesserung der Luftzirkulation vorgesehen (s. Fig. 7).

Die Unterseite des Deckels (46) weist vorteilhafterweise eine Rippenstruktur (49) (s. Fig. 6) auf, wodurch die Stabilität des Deckels entsprechend der vorgegebenen Druckbelastung erreicht wird.

Gleichzeitig kann die Wanddicke gering gehalten werden, wodurch der Materialeinsatz und das Gewicht des Deckels niedrig gehalten wird und dessen Bearbeitbarkeit verbessert wird.

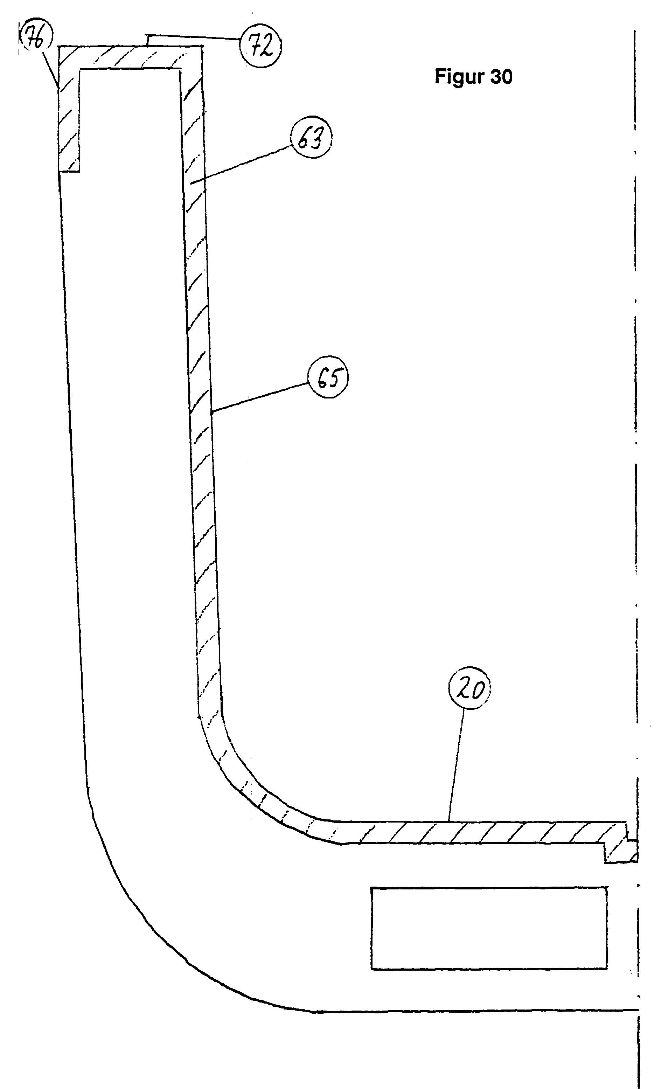

Ein weiteres ausführungsgemäßes Beispiel eines Kabelkanals besitzt ausschließlich ungefähr vertikal aus dem Trogboden (20) hervorgehende Trogwandungen (63) (s. Fig. 30).

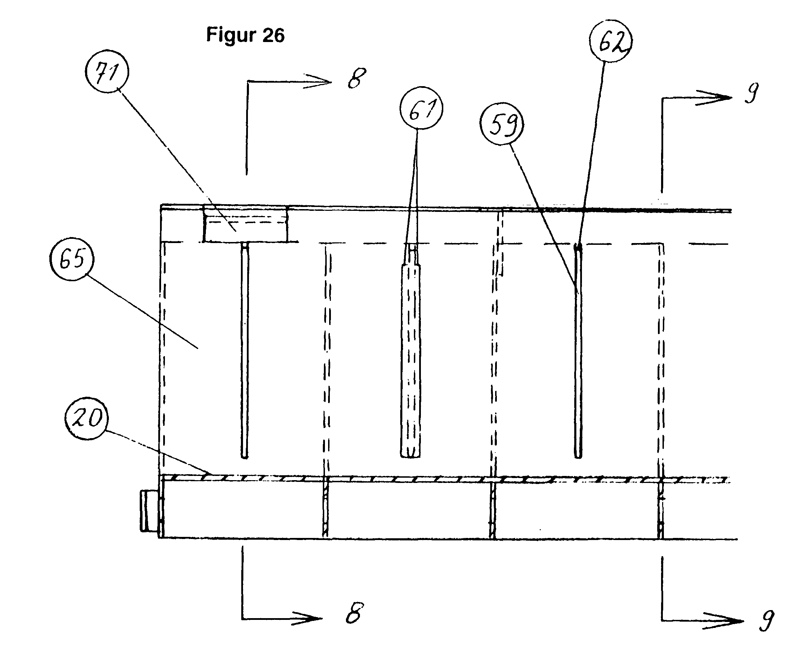

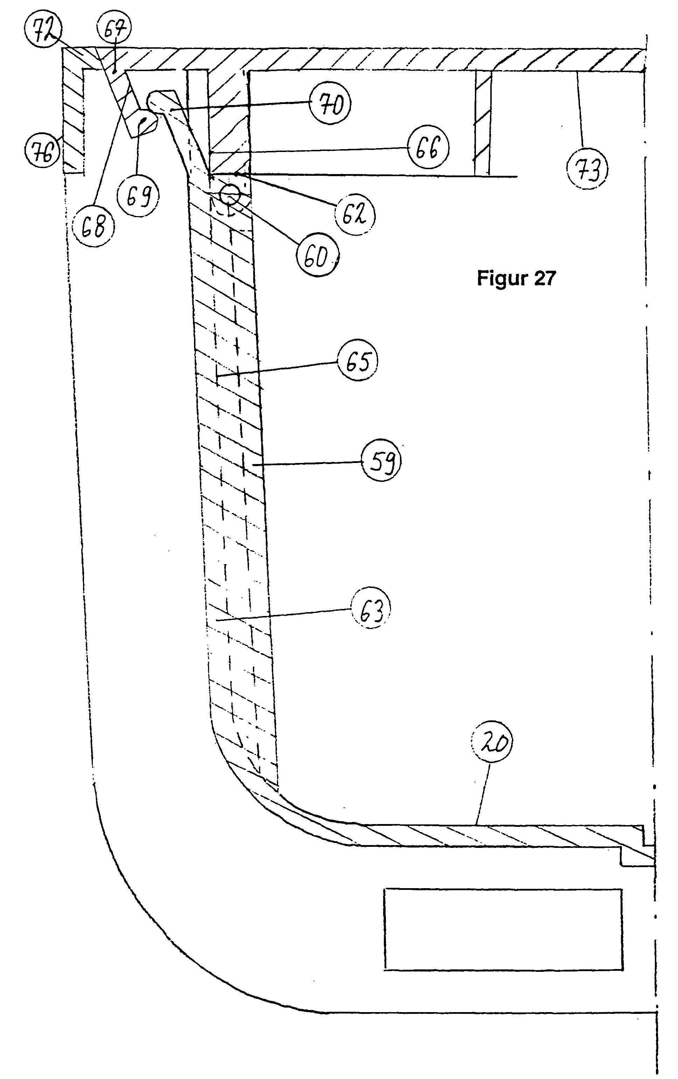

Bei dieser Variante wird der Deckel auf an den Troginnenwandungen (65) zunächst ungefähr vertikal aus dem Bogen des U-Profils hervorgehenden, und dann noch unterhalb der Trogoberkante (72) ungefähr horizontal bis an die Troginnenwand (65) verlaufenden Ausprägungen (59) (s. Fig. 26) aufgelegt. Gleichzeitig rasten die Befestigungsmittel (68) an der Deckelaußenseite (66) form- und kraftschlüssig in die Aussparungen (71) (s. Fig. 26) der Verbreiterung der Trogoberkante (72) und die in diesem Bereich speziell geformte Trogwand (70) ein und geben dem Deckel festen und sicheren Halt gegen beispielsweise Sogwirkungen vorbeifahrender Fahrzeuge (s. Fig. 27).

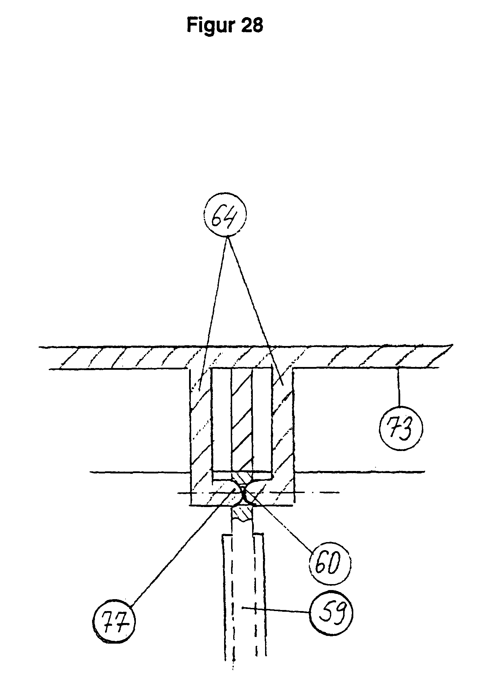

Zweckmäßigerweise sind beispielsweise an der Unterseite des Deckels (73) Befestigungsmittel (64) angebracht, die bei geschlossenem Deckel in die Durchbrüche (60) im oberen Bereich der Ausprägungen (59), die an den Troginnenwandungen (65) angebracht sind, eingerastet sind (s. Fig. 28).

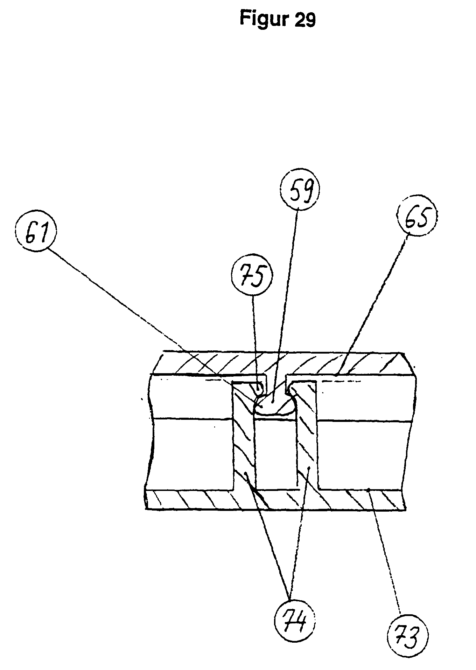

Ein weiterer Vorteil liegt in der Befestigungsmöglichkeit der Deckel innerhalb der Tröge, z. B. während Bauphasen, damit ein Wegfliegen der Deckel durch Sogwirkung unterbunden wird (s. Fig. 29).

Hierzu wurden sinnvollerweise ebenfalls z. B. an der Unterseite des Deckels (73) zapfenähnliche, mit Auswölbungen (75) an ihren Innenseiten versehene Ausprägungen angebracht, die das Einhängen des Deckels an den entsprechend geformten Verbreiterungen (61), der an den Troginnenwandungen (65) angebrachten Ausprägungen (59), ermöglichen (s. Fig. 29).

Die Verlegungsmöglichkeit der Kabelkanäle in aufgeständerter Form wird durch entsprechende Bohrungen (26) im Trogboden (20) sichergestellt (s. Fig. 2, 23).

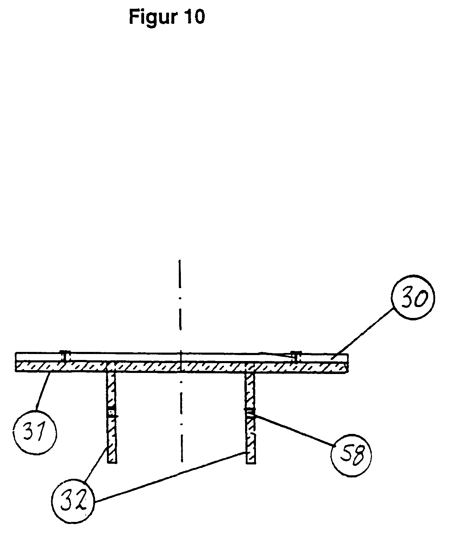

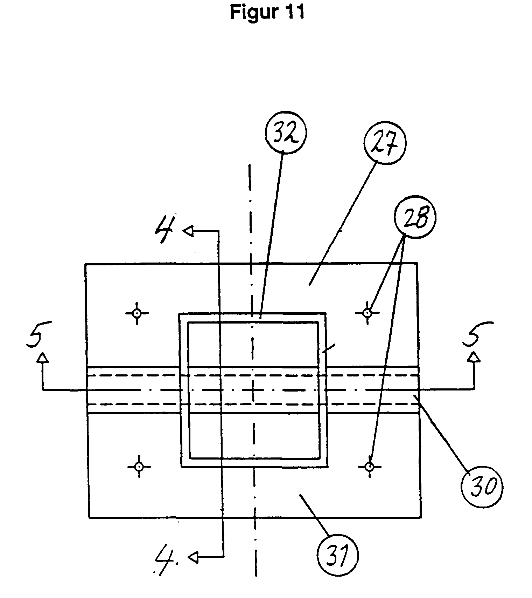

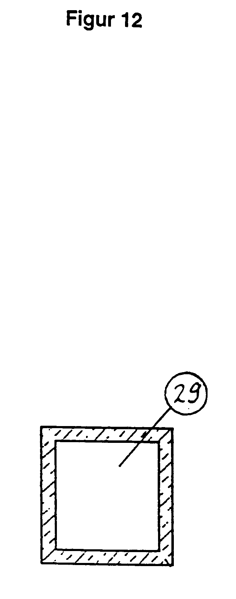

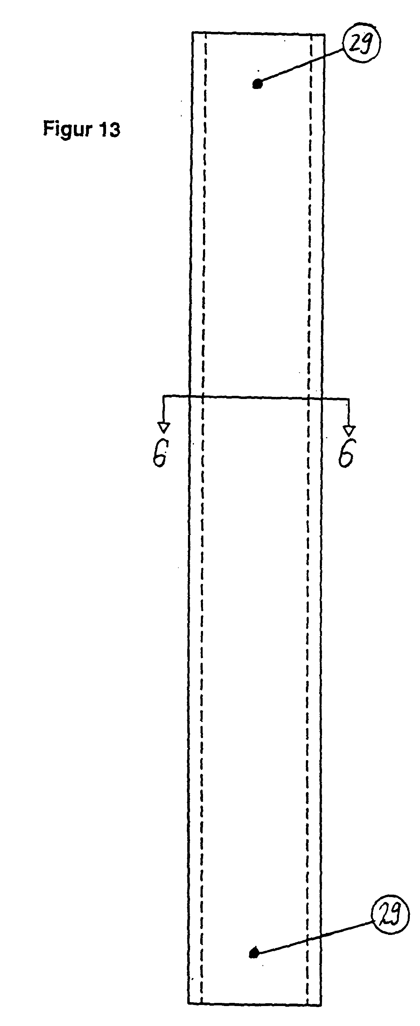

Durch diese Bohrungen (26) wird mit Hilfe von Steckelementen (wie z. B. Bolzen) eine Verbindungsmöglichkeit mit einem Zusatzteil (27) mit entsprechenden Bohrungen (28) (s. Fig. 10, 11) geschaffen, wobei das Zusatzteil (27) ein Verbindungselement zum eigentlichen Ständer (29) (s. Fig. 12, 13) darstellt und eine stabile Verlegung der Kabelkanäle ermöglicht.

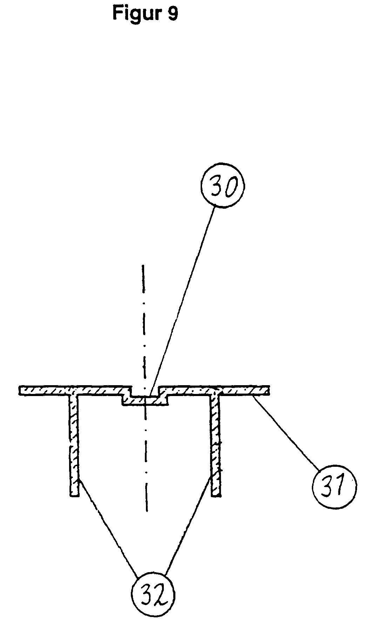

Das Zusatzteil (27) in Fig. 9 besitzt vorzugsweise in der Mitte eine querlaufende Einkerbung (30), die eine passgenaue Aufnahme der Endrippen (17, 19) (s. Fig. 2) zweier Tröge ermöglicht und trotzdem der vorgegebenen Streckenführung als Polygonlinie folgen kann.

Die Verbindung zum Ständer (29) erfolgt beispielsweise durch ein an der Unterseite (31) des Zusatzteils (27) befindliches Profil (32) (s. Fig. 9, 10, 11), das auf den Ständer (29) aufgesetzt wird. Die Verbindung der beiden Teile erfolgt beispielsweise durch weitere Steckelemente.

Der Ständer (29) (s. Fig. 12, 13) ist zweckmäßigerweise in seiner Form der Form des Profils (32) (s. Fig. 9, 10, 11) an der Unterseite (31) des Zusatzteils (27) angepaßt.

Die vieleckige Form wird dann zur Anwendung kommen, wenn eine nicht drehbare Verbindung mit dem Zusatzteil bei der Montage erforderlich ist.

Sollte bei der Montage ein nachträgliches Drehen des Zusatzteils zur poligonförmigen Verlegung notwendig sein, so wird ein Rundprofil eingesetzt.

Der Ständer (29) wird aus Gründen der Gewichts- und Materialersparnis als Hohlprofil hergestellt, was auch vorteilhafterweise zur Verbesserung seiner statischen Eigenschaften führt.

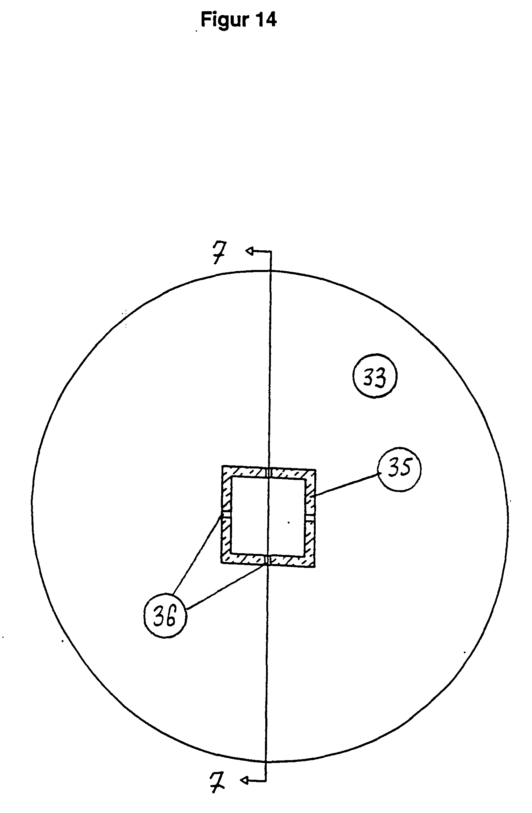

Die Verankerung der Ständer (29) im Erdreich erfolgt beispielsweise mit Hilfe eines Ständer- fußes (33) (s. Fig. 14), dessen Grundfläche eine beliebige Form aufweist.

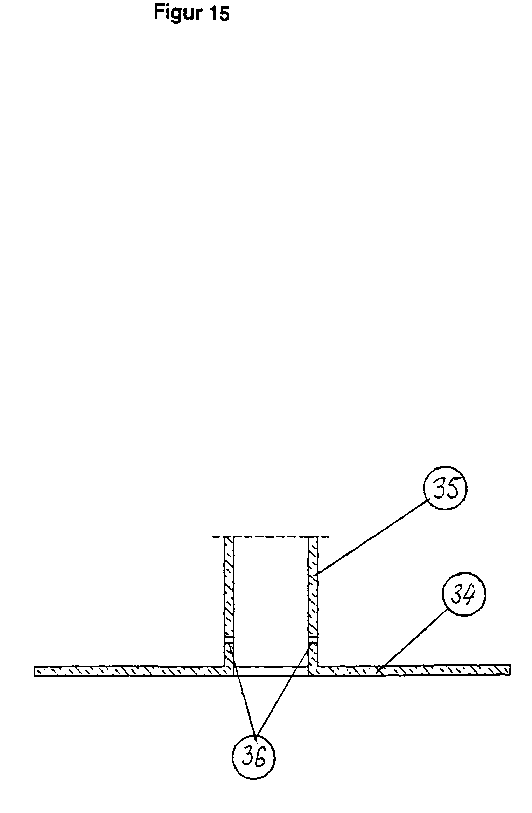

Auf der Oberseite (34) dieser als Grundfläche dienenden Platte (33) befindet sich ein zweckmäßigerweise der Ständerform entsprechendes Profil (35) mit Bohrungen (36), in das der Ständer (29) eingesetzt wird (s. Fig. 14, 15). Die Verbindung der beiden Teile erfolgt beispielsweise durch weitere Steckelemente.
Nach dem Einsetzen des Ständers (29) mit dem entsprechenden Ständerfuß (33) in ein dafür ausgehobenes Loch wird dieses z. B. mit Erde verfüllt und bietet dem Ständer (29) sicheren Halt.

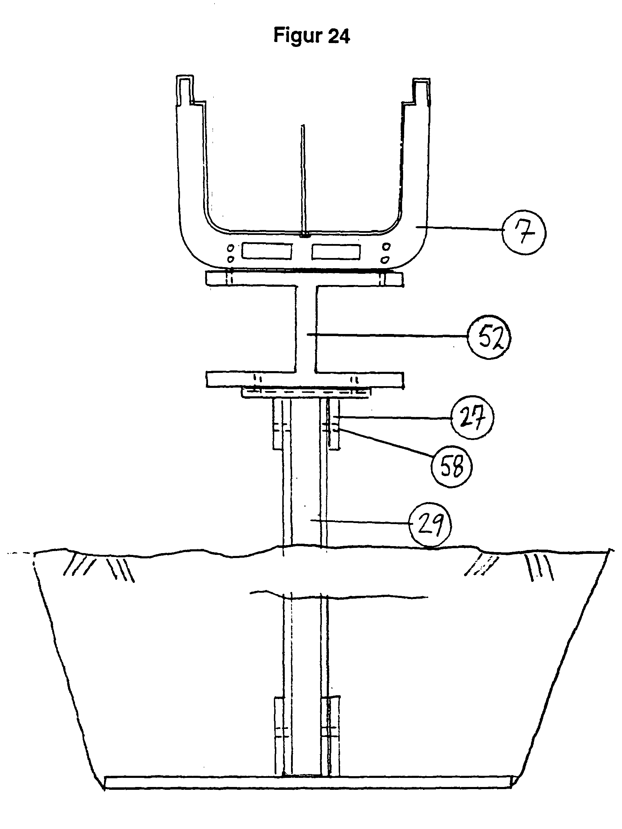

Bei Verwendung eines Trägerprofils (52) (s. Fig. 24), das beispielsweise die Form eines Doppel-T-Trägers haben kann, lassen sich leicht größere Distanzen bei einer geringeren Ständerzahl überbrücken. Die Verbindung der bereits gesetzten Ständer (29) mit dem Zusatzteil (27) sowie dem Trägerprofil (52) erfolgt beispielsweise ebenfalls durch Steckelemente (s. Fig. 24).

Anschließend wird das Trägerprofil (52) z. B. durch Winkelprofile mit Bohrlöchern und Steckelementen mit den Bohrlöchern (53) in den Querrippen (7) (s. Fig. 2) am Trogboden (20) verbunden (s. Fig. 24).

Alle Bestandteile des Kabelkanals können wegen ihrer Unverrottbarkeit vorteilhafterweise in allen klimatischen Bereichen eingesetzt werden.

Sollten in der Zukunft aufgrund veränderter Anforderungen oder des technischen Fortschritts andere Materialien zum Einsatz kommen, können die Kunststoffteile vorteilhafterweise zu 100 % recycelt und in den Rohstoffkreislauf zurückgeführt werden.

Ingesamt umfaßt die Erfindung einen Kunststoff-Kabelkanal aus Trog, Deckel, Trennelement, Ständer, Ständerfuß und Träger.

Die bisher eingesetzten Kabelkanäle bestehen überwiegend aus Stahlblech bzw. Beton. Ihnen ist gemeinsam, daß sie ein sehr hohes Stückgewicht aufweisen und daraus resultierend schwer transportabel und vor allem schwer verlegbar sind. Die Verlegung von z. B. Betonteilen ist ohne den Einsatz von maschinellen Hebezeugen praktisch unmöglich.

Diese Nachteile treten beim Einsatz von Kabelkanälen aus Kunststoff nicht auf.

Die erfindungsgemäßen Kabelkanäle aus Kunststoff sind sehr leicht zu verlegen und zu transportieren. Durch ihr spezielles Verschlußsystem sind sie sehr einfach und sicher verschließbar, sodaß der Deckel bei oberirdischer Verlegung nicht durch den Sog vorbeifahrender Fahrzeuge abgehoben werden kann.

Die Verbindung der einzelnen Tröge erfolgt durch ein Endrippenschloß, das durch seine besondere Ausführung auch Anpassungen an die Topographie erlaubt.

Das Einwachsen von Pflanzen in das Troginnere wird durch eine Trogbodenverlängerung und deren formschlüssige Aufnahme im nachfolgenden Trog verhindert.

Die Befestigung einzelner Tröge auf dem Erdplanum (z. B. in Bauphasen) und in der Erde wird durch in außenliegende Führungshilfen einzuschlagende Befestigungselemente erreicht. Diese können leicht und schnell wieder entfernt werden und haben keinen Kontakt zu den stromführenden Kabeln im Trog.

Eine nachträgliche Verkürzung von Trog und Deckel ist wegen der an beiden Teilen vorgesehenen Trennführungslinien und des verwendeten Materials schnell und leicht möglich.

Ein bei Bedarf montierbares Trennelement ermöglicht die getrennte Führung der zu verlegenden Kabel.

Die Kunststoffkabelkanäle dienen der Verlegung von Kabeln, Kabelsträngen und Schrumpfgarnituren in oberirdischer, aufgeständeter und erdverlegter Form sowie an Bauwerken befestigt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: einen Querschnitt durch ein erfindungsgemäßes Ausführungsbeispiel des Troges, längs Linie 1-1 in Figur 2.
- Figur 2: eine Draufsicht auf ein erfindungsgemäßes Ausführungsbeispiel in Richtung des Pfeils A in Figur 1 des Troges.
- Figur 3: eine Detailansicht eines erfindungsgemäßen Ausführungsbeispiels eines Schlosses an der Endrippe eines erfindungsgemäßen Troges. Längsschnitt, Linie 2-2 in Figur 2.

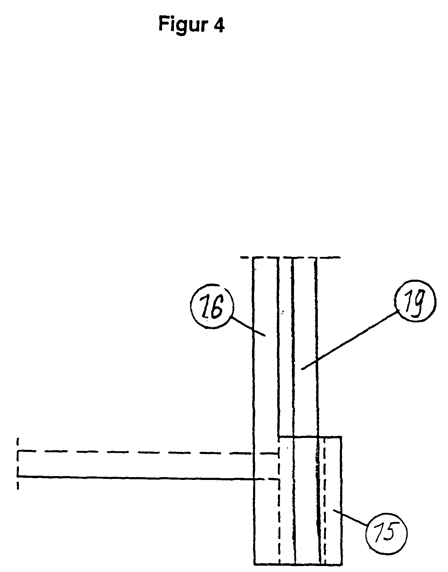

- Figur 4: eine Außenansicht eines erfindungsgemäßen Ausführungsbeispiels eines Schlosses an einer Endrippe in Richtung des Pfeils B in Figur 2.
- Figur 5: einen Querschnitt durch ein erfindungsgemäßes Ausführungsbeispiel des Deckels. Querschnitt Linie 3-3 in Figur 6.
- Figur 6: eine Deckelansicht eines erfindungsgemäßen Ausführungsbeispiels eines Deckels von unten.
- Figur 7: eine Deckelansicht eines erfindungsgemäßen Ausführungsbeispiels eines Deckels von oben.
- Figur 8: ein Querschnitt des an einem erfindungsgemäßen Ausführungsbeispiel eines Troges befindlichen Teils eines Ausführungsbeispiels des Trog-Deckel-Verschluß-systems.
- Figur 9: einen Längsschnitt durch ein erfindungsgemäßes Ausführungsbeispiel der Trogauflagerplatte. Längsschnitt Linie 4-4 in Figur 11.
- Figur 10: einen Querschnitt durch ein erfindungsgemäßes Ausführungsbeispiel der Trogauflagerplatte. Querschnitt Linie 5-5 in Figur 11.
- Figur 11: eine Bodenansicht eines erfindungsgemäßen Ausführungsbeispiels einer Auflagerplatte.
- Figur 12: einen Querschnitt durch ein erfindungsgemäßes Ausführungsbeispiel eines Ständers. Querschnitt Linie 6-6 in Figur 13.
- Figur 13: eine Ansicht eines erfindungsgemäßen Ausführungsbeispiels eines Ständers.
- Figur 14: eine Draufsicht auf ein erfindungsgemäßes Ausführungsbeispiel eines Ständerfus-ses, Linie 6-6 in Figur 13.
- Figur 15: ein Querschnitt durch ein erfindungsgemäßes Ausführungsbeispiel eines Ständerfußes, Querschnitt Linie 7-7 in Figur 14.
- Figur 16: eine Draufsicht auf ein erfindungsgemäßes Ausführungsbeispiel eines Dekkels eines erfindungsgemäßen Ausführungsbeispiels eines "Umlenkungstroges".
- Figur 17: eine Draufsicht auf ein erfindungsgemäßes Ausführungsbeispiel eines "Umlenkungstroges".
- Figur 18: eine Seitenansicht auf ein erfindungsgemäßes Ausführungsbeispiel eines "Absenkertroges" mit einem dazu passenden erfindungsgemäßen Ausführungsbeispiel eines Deckels.
- Figur 19: eine Seitenansicht auf ein erfindungsgemäßes Ausführungsbeispiel eines "Anhebertroges" mit einem dazu passenden erfindungsgemäßen Ausführungsbeispiel eines Deckels.
- Figur 20: eine Detailansicht eines erfindungsgemäßen Beispiels einer Führungshilfe an einer Querrippe, einer ebenfalls erfindungsgemäßen Öffnung mit Sicherungsclips in der verbreiterten Trogoberkante sowie der dort befindlichen Aussparung.
- Figur 21: ein Querschnitt durch zwei erfindungsgemäße Kabelkanäle und deren erfindungsgemäße Verbindung mit Befestigungselementen bei übereinander gestapelten Kabelkanalelementen.
- Figur 22: ein Querschnitt durch zwei erfindungsgemäße Kabelkanäle und deren erfindungsgemäße Verbindung mit Befestigungselementen bei nebeneinander gestellten Trögen.
- Figur 23: ein Ausschnitt eines erfindungsgemäßen Kabelkanals mit erfindungsgemäßen Durchbrüchen in der Einkerbung im Trogboden, der erfindungsgemäßen Verlängerung des Trogbodens, Ausbruchstellen und weiterer technischer Details.
- Figur 24: eine Frontansicht eines erfindungsgemäßen Beispiels der aufgeständerten Version des Kabelkanals mit einem Trägerprofil.

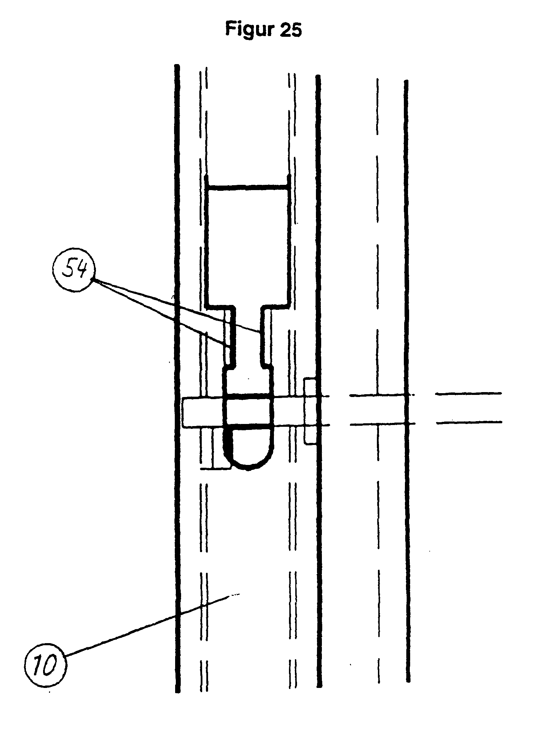

- Figur 25: eine Detailansicht eines erfindungsgemäßen Beispiels der Öffnung mit Sicherungs-clips.
- Figur 26: ein verkürzter Längsschnitt durch ein erfindungsgemäßes Beispiel eines Troges (Innenansicht).
- Figur 27: ein Halbschnitt durch ein erfindungsgemäßes Beispiel eines geschlossenen Trog-Deckel-Systems längs Linie 8 - 8 in Fig. 26.
- Figur 28: ein Detailschnitt eines erfindungsgemäßen Beispiels des Eingriffs der Befestigungsmittel an der Deckelunterseite in die Öffnungen im oberen Bereich der Ausprägungen an den Troginnenwandungen bei geschlossenem Trog-Deckel-System.
- Figur 29: ein Detailaschnitt eines erfindungsgemäßen Beispiels der Einhängevorrichtung von Trog und Deckel.
- Figur 30: ein Querschnitt durch ein erfindungsgemäßes Beispiel eines Troges längs Linie 9 - 9 in Fig. 26.

Ein Ausführungsbeispiel eines erfindungsgemäßen Kabelkanals umfaßt, wie in Fig. 1 dargestellt, einen U-förmig ausgebildeten, als Ganzes bezeichneten Trog, welcher zwei, die Schenkel des U bildende Seitenwandungen (9) aufweist, welche mit ihren unteren Längsseiten in einen Boden (20) übergehen, welcher seinerseits den Mittelschenkel des U bildet.

Die Trogaußenwandungen (2) weisen angeordnete Querrippen (7) auf, welche im wesentlichen senkrecht auf diesen (2) stehen und von diesen ausgehend sich über eine im wesentlichen konstante Breite nach außen erstrecken. Die Querrippen (7) verlaufen von der ungefähr vertikal nach unten verlängerten, verbreiterten Trogoberkante (10) über die gesamte Höhe der Trogseitenwandungen (9) und umschließen den Trogboden (20) an dessen Unterseite zumindest teilweise, wobei die Querrippen (7) ihrerseits vorzugsweise Aussparungen (8) aufweisen und somit den Wasserabfluß in Längsrichtung der Tröge ermöglichen (s. Fig. 1, 2).

Die Querrippen (7) sind vorzugsweise einstückig an die Trogaußenwandungen (2) und den Trogboden (20) angeformt und bilden in ihrem unteren Bereich am Trogboden (20) bei beispielsweise ungefähr horizontalem Verlauf eine Auflagefläche, mit der sich der Trog auf dem Untergrund abstützt (s. Fig. 2).

Der Boden (20) weist eine ungefähr mittig desselben in einer Längsrichtung des Kanals verlaufende Einkerbung (21) auf, in welche Trennelemente (22) einsteckbar sind, die den Trog in Teilräume unterteilen, die sich über dem Trogboden (20) bilden (s. Fig. 1).

In diesen Teilräumen besteht die Möglichkeit, unterschiedliche Kabel zu verlegen. Wie aus Fig. 23 hervorgeht, sind in der im Trogboden (20) in einer Längsrichtung verlaufenden Einkerbung (21) zweckmäßigerweise Durchbrüche zur Entwässerung (24) vorgesehen. Lage, Anzahl, Form und Durchmesser der Durchbrüche (24) sind vorteilhafterweise so zu wählen, daß ein Wasserstau im Trog vermieden wird.

Wie in Fig. 23 anhand eines ausführungsgemäßen Beispiels des Troges dargestellt, weisen die Tröge zweckmäßigerweise sowohl im Boden (20) als auch in den Trogwandungen (9) mindestens eine beispielsweise perforierte Ausbruchstelle (25) auf.

Diese Ausbruchstelle (25) ist vorzugsweise dann zu öffnen, wenn eine nachträgliche Einbringung von Kabeln erforderlich ist. Form und Durchmesser der Ausbruchstelle (25) ist vorteilhafterweise am Durchmesser und der Anzahl der nachträglich einzubringenden Kabel zu orientieren. Die Lage der Ausbruchstelle (25) im Boden (20) bzw. den Trogwandungen (9) ist zweckmäßigerweise ungefähr mittig zwischen den Querrippen (7).

Zur Fixierung des Troges im Erdreich bzw. zur Verbindung nebeneinander (s. Fig. 22) oder übereinander (s. Fig. 21) liegender Tröge sind an mindestens einer verbreiterten Trogoberkante (10) vorzugsweise mehrere Öffnungen mit Sicherungsclips (11) (s. Fig. 20, 25) sowie beispielsweise direkt darunter an mehreren Querrippen (7) ungefähr vertikal verlaufende Führungshilfen (12) (s. Fig. 20) z. B. Leisten angebracht. Durch diese Mittel können Befestigungselemente (13) bei beispielsweise übereinander liegenden Trögen oder bei einer Notwendigkeit zur Fixierung eines auf der Erde liegenden Troges zur Anwendung kommen. Sollen nebeneinander liegende Tröge verbunden werden, so kommen ebenfalls Befestigungselemente (14) zum Einsatz (s. Fig. 22).

Beide Befestigungselemente (13, 14) werden vorzugsweise von oben zunächst durch die Öffnungen in der verbreiterten Trogoberkante (10), dann entlang den Führungshilfen (12) und anschließend ins Erdreich gedrückt. Die Befestigungselemente (13) können mit ihren beispielsweise abgewickelten oberen Enden vollständig durch die Öffnungen mit Sicherungsclips (11) (s. Fig. 20) bzw. durch deren innere Enden (54) (s. Fig. 25) gedrückt werden. Da die Befestigungselemente einen etwas höheren Durchmesser besitzen als der Abstand zwischen den inneren Enden der Sicherungsclips, rasten sie unterhalb dieser Enden ein und sind somit vollständig versenkt.

Ein Hochdrücken der Befestigungselemente bei z. B. Frost wird weitestgehend verhindert, sodaß auch die Verletzungs- und Stolpergefahr ausgeschlossen ist.

Die vertikale Verlängerung (42) (s. Fig. 1) der verbreiterten Trogoberkante (10 dient einerseits als Schutz vor Verschmutzung der Führungshilfen (12) und andererseits, durch den vorzugsweise vorhandenen Abstand zur Trogaußenwand (2), zur sicheren und vollständigen Aufnahme der Befestigungselemente (13) in den Öffnungen mit Sicherungsclips (11).

Durch die sinnvolle Anordnung der Öffnungen mit Sicherungsclips (11) und der Führungshilfen (12) außerhalb des Troginneren muß weder der Deckel zum Entfernen der Befestigungselemente (13, 14) geöffnet werden, noch kommen die Kabel im Troginneren mit den beispielsweise metallischen Befestigungselementen (13, 14) in Berührung.

Zur Verbindung von hintereinander liegenden Trögen besitzt der Trog vorzugsweise an einer seiner beiden Endrippen (17) ein Schloßsystem (15) (s. Fig. 2).

Hierzu weist dieses Trogende (16) z. B. in seinem unteren Bereich an beiden Außenseiten jeweils ein Schloßsystem (15) auf, welches gebildet ist durch einen sich, ausgehend von der Endrippe (17), erstreckenden hakenähnlichen Übergriff, so daß zwischen einer Stirnseite der Endrippe (17) und dem hakenförmigen Übergriff (s. Fig. 3) ein Zwischenraum (18) verbleibt, in welchen die andere, einen derartigen Übergriff nicht aufweisende Endrippe (19) (s. Fig. 2) des nächstfolgenden Troges einführbar ist (s. Fig. 4).

Der Übergriff kann, wie in Fig. 3 dargestellt, so ausgebildet sein, daß der Zwischenraum (18) nach unten offen ist.

Im Trogboden (20) an der Endrippe (19) eines Troges ist zweckmäßigerweise eine ungefähr horizontale Verlängerung (43) (s. Fig. 23) vorzugsweise über die gesamte Breite des Troges angebracht, die ihre Komplementärin (44) am Trogende (16) (s. Fig. 2) des nächsten Troges findet. Die Einkerbung im Trogboden (21) läuft zweckmäßigerweise auch durch diese Verlängerung (43) (s. Fig. 23).

Durch diese ineinandergreifenden Teile wird das Einwachsen von Pflanzen in das Troginnere wirksam verhindert.

Sowohl die Konstruktion des Schloßsystems (15) als auch die Verlängerung des Trogbodens (43) bestimmen die Reihenfolge und damit die Richtung in der die Tröge nacheinander sinnvoll zu verlegen sind. Als zusätzliche Arbeitserleichterung sind beispielsweise auf der verbreiterten Trogoberkante (10) Richtungspfeile (50) angebracht (s. Fig. 2).

Mindestens eine Troginnenwandung (1) weist im oberen Bereich einen vorzugsweise horizontal und in Richtung der Trogaußenwandungen (2) verlaufenden Versatz auf, der eine Auflagerfläche (55) (s. Fig. 1) für ein, in Fig. 5, 6, 7 näher beschriebenes ausführungsgemäßes Beispiel eines innenliegenden Deckels, bildet. Oberhalb der Auflagerfläche besitzt die versetzte Troginnenwandung (37) (s. Fig. 1) ungefähr mittig eine vorzugsweise konkav geformte, nicht unbedingt über die gesamte Länge des Troges verlaufende Einbuchtung (38) (s. Fig. 8). Diese Einbuchtung (38) dient der form- und kraftschlüssigen Verbindung mit der entsprechend geformten Ausbuchtung (39) des Deckels (s. Fig. 5), wobei die Ausbuchtungen (39) an der Deckelaußenseite (6a) ungefähr mittig verlaufen und sich nicht zwangsläufig über die gesamte Länge des Deckels erstrecken.

Die Höhe der versetzten Troginnenwandung (37) entspricht zweckmäßigerweise der Höhe der Deckelaußenseite (6a), damit kein Höhenunterschied zwischen der oberen Deckelaußenkante (6) und der versetzten Troginnenwandung (37) der verbreiterten Trogoberkante (10) entsteht (s. Fig. 8).

In mindestens einer der verbreiterten Trogoberkanten (10) befinden sich vorzugsweise mehrere Aussparungen (40) (s. Fig. 20) zur ebenfalls form- und kraftschlüssigen Aufnahme von in zweckmäßigerweise gleicher Anzahl an der Deckelaußenseite (6a) angebrachten beispielsweise hakenförmigen Profilen (41) (s. Fig. 5).

Diese Profile (41) laufen zunächst ungefähr horizontal zur Deckeloberseite (5) um dann ungefähr vertikal nach unten weitergeführt zu werden. Zweckmäßigerweise ist die Innenseite des ungefähr vertikal nach unten verlaufenden Abschnitts (56) beispielsweise konisch angeformt, um ein leichtes Einrasten in die Aussparung (40) in der verbreiterten Trogoberkante (10) zu gewährleisten (s. Fig. 5).

In Verbindung mit dem oben erläuterten Schnappverschlußsystem an der Deckelaußenseite (6a) bzw. der versetzten Troginnenwandung (37) oberhalb der Auflagerfläche (55) wird somit eine äußerst sichere Verbindung der beiden Teile gewährleistet, so daß auch der Sog vorbeifahrender Fahrzeuge den Deckel nicht abheben kann.

Die Unterseite des Deckels (46) ist in Fig. 6 dargestellt, wobei zwischen längs, quer und vorzugsweise diagonal verlaufenden Rippen (49) unterschieden wird.

Die Rippen (49) sind vorzugsweise einstückig an die Deckelunterseits (46) und die Innenseite des Deckelrandes (57) angeformt. Sinnvollerweise befinden sich z. B. an der Deckelunterseite (46) mehrere punktuelle Erhöhungen (48) (s. Fig. 5).
Diese dienen bei Transport und Lagerung der Deckel auf ihrer durch die Rippen (49) charakterisierten Unterseite (46) als Schutz für die, mindestens einzelnen, an den Rippen (49) an der Deckelunterseite (46) zweckmäßigerweise angeformten, hakenartigen Ausprägungen (47) (s. Fig. 5, 6).

Diese Ausprägung ermöglicht zweckmäßigerweise ein Einhängen der Deckel in eine an mindestens einer Troginnenwandung (1) angebrachten sinnvollerweise formschlüssigen Schiene (45) (s. Fig. 2).
Diese Vorrichtungen sind besonders zweckmäßig zur Aufbewahrung der Deckel bei geöffneten Trögen, also z. B. in Bauphasen.
Ein unerwünschtes Wegfliegen der Deckel durch Sogwirkung vorbeifahrender Fahrzeuge wird somit verhindert.

Auf der Deckeloberseite (5) sind zweckmäßigerweise, wie aus Fig. 5, und 7 ersichtlich, vorzugsweise halbrund angeformte Trennführungslinien (4) zur manuellen Verkürzung des Deckels angebracht. Die Trennführungslinien (4) verlaufen in beliebig festlegbaren Winkeln und beliebigem Abstand untereinander. Ein positiver Nebeneffekt der Trennführungslinien (4) besteht darin, daß sie zweckmäßigerweise die Rutschgefahr beim Begehen des Deckels eliminieren.

In Fig. 7 werden die in einem ausführungsgemäßen Beispiel eines Deckels zweckmäßigerweise befindlichen Entlüftungsöffnungen (51) dargestellt. Der Durchmesser, die Form, die Lage und die Anzahl der Entlüftungsöffnungen (51) ist sinnvollerweise so zu wählen, daß ein Wärmestau im verschlossenen Trog vermieden wird. Die Entlüftungsöffnungen sollten zweckmäßigerweise nicht direkt über einer Rippe (49) liegen.

Eine zusätzliche sinnvolle Funktion der Entlüftungsöffnungen (51) ist darin zu sehen, daß bei geeigneter Größe der Öffnungen auch mit entsprechenden Werkzeugen in die Öffnungen gegriffen werden kann und somit der Deckel mühelos vom Trog abgehoben werden kann.

Für eine aufgeständerte Verlegeform von Trögen befinden sich im Trogboden (20) (siehe Fig. 2) Bohrungen (26) zur Aufnahme von beliebigen Steckelementen zwischen Trog und Zusatzteil (27), daß zweckmäßigerweise entsprechend angeordnete Bohrungen (28) aufweist (siehe Fig. 11). Durch diese Bohrungen (26, 28) können vorzugsweise entsprechende Bolzen, Schrauben, Spreiznieten o. ä. gesteckt werden, damit eine sichere Verbindung mit dem Zusatzteil (27) kraftschlüssig gewährleistet wird, wobei zumindest eine Bewegung in der Vertikalen unterbunden werden muß. Sinnvollerweise befinden sich diese Bohrungen (26) im Endbereich des Troges, damit das Zusatzteil bei relativ geringer Größe zwei durch das Endrippenschloß (15) verbundene Tröge abstützen kann. Form und Größe der Bohrungen im Trogboden (20) sind zweckmäßigerweise so zu wählen, daß auch nach dem Einfügen der im Durchmesser etwas geringeren Steckelemente ein gewisses Maß an horizontaler Bewegungsfreiheit bestehen bleibt, damit durch Temperaturschwankungen entstehende Längenänderungen ausgeglichen werden können.

Eine querverlaufende Einkerbung (30) ist vorzugsweise in der Mitte des Zusatzteils vorzusehen. Die Tiefe der Einkerbung (30) entspricht zweckmäßigerweise mindestens der Höhe der Endrippen (16, 19), gemessen von der Unterseite des Trogbodens, die sie aufnehmen muß (s. Fig. 9, 10, 11).

Die Breite der Einkerbung (30) ist zweckmäßigerweise so zu wählen, daß sie zumindest genügend Spielraum zur Aufnahme der Endrippen (16, 19) zweier Tröge bietet. Sollte eine Abweichung aus der Horizontalen gewünscht werden, so ist die lichte Breite der Einkerbung sinnvollerweise deutlich größer zu gestalten als die Dicke der beiden Endrippen (16, 19) der Tröge.

An der Unterseite des Zusatzteils (31) befindet sich ein beispielsweise viereckiges Profil (32) (s. Fig. 11), welches vorzugsweise ungefähr vertikal aus diesem hervorgeht und mindestens ein Bohrloch (58) (s. Fig. 10, 24) zur Verbindung des Zusatzteils mit einem sinnvollerweise entsprechend geformten Ständer (29) (s. Fig. 12) aufweist.
Der Ständerquerschnitt kann beispielsweise kleiner gewählt werden als der Querschnitt des Profils (32) an der Unterseite des Zusatzteils.

Die Höhe des Profils (32) an der Unterseite des Zusatzteils (31), gemessen von der Unterseite des Zusatzteils (31), ist zweckmäßigerweise so zu wählen, daß genügend Platz zur Einfügung von mindestens einem Steckelement in die bestehende Bohrung (58) am Profil des Zusatzteils vorhanden ist.

Der Ständer (29) (s. Fig. 12) wird zweckmäßigerweise aus Gewichtsgründen als ein mindestens einwandiges Hohlprofil ausgebildet.

Der Ständer (29) wird zweckmäßigerweise an dem des Zusatzteils abgewandten Ende mit einem Ständerfuß (33) (s. Fig. 14) verbunden. Hierzu besitzt der Ständerfuß (33) ein beispielsweise viereckiges, der Ständerform entsprechendes, Profil.

Der Durchmesser des Profils (35) am Ständerfuß (33) (s. Fig. 14, 15) kann beispielsweise größer gewählt werden als der Durchmesser des Ständers (29).

Die Verbindung von Ständer (29) und Ständerfuß (33) erfolgt zweckmäßigerweise ebenfalls durch Steckelemente in mindestens einem Bohrloch (36) im Profil des Ständerfußes.

Die Grundplatte des Ständerfußes kann beispielsweise rund sein.

Zur Überwindung größerer Distanzen, als sie durch die gewählte Troglänge vorgegeben sind, kann auf ein Trägerprofil (52) (s. Fig. 24), das beispielsweise als Doppel-T-Träger geformt sein kann, zurückgegriffen werden. Das Trägerprofil wird zweckmäßigerweise auf die bereits gesetzten und mit dem Zusatzteil (27) verbundenen Ständer (29) aufgesetzt und durch Bohrlöcher mittels Steckelementen kraft- und formschlüssig verbunden.

Die Verbindung des Trägerprofils (52) mit den Querrippen (7) am Trogboden (20) erfolgt beispielsweise mittels Steckelementen, die durch z. B. Winkelelemente und die Bohrlöcher (53) in die Querrippen gesteckt werden.
Diese Verlegeform kommt vor allem dann zum Einsatz, wenn die Topologie die Verwendung von Ständern nicht zuläßt.

Ein weiteres erfindungsgemäßes Beispiel von Trog und Deckel ist in den Figuren 26 - 30 dargestellt.

Hierbei verlaufen die Trogwandungen (63) ungefähr vertikal aus dem ungefähr horizontalen Trogboden (20) nach oben um anschließend in eine ungefähr horizontal nach außen verlaufende Verbreiterung der Trogoberkante (72) zu münden und anschließend in einer wieder ungefähr vertikal nach unten verlaufenden Verlängerung der Trogoberkante (76) zu enden (s. Fig. 27, 30).

Der Deckel findet sein ungefähr horizontales Auflager (62) beispielsweise auf den ungefähr von der Biegung des U-Profils ausgehenden an den ungefähr vertikalen Troginnenwandungen (65) vorzugsweise einstückig angeformten, zunächst ungefähr vertikal und später ungefähr horizontal bis an die Troginnenwandung (65) verlaufenden, Ausprägungen (59) und liegt somit zwischen den ungefähr vertikal verlaufenden Trogwandungen (63) (s. Fig. 26, 27).

Der Deckel besitzt zweckmäßigerweise an seiner Außenseite (66) zunächst ungefähr horizontal nach außen und im Anschluß wieder in einem spitzen Winkel nach innen und unten in Richtung der Deckelaußenseite (66) verlaufende Befestigungsmittel (67). An der Innenseite (68) des nach innen und unten verlaufenden Bereichs des Befestigungsmittels (67) ist sinnvollerweise eine Auswölbung (69) angeformt, die eine kraft- und formschlüssige Verbindung mit der im Bereich der Aussparung (71) (s. Fig. 26) in der Verbreiterung der Trogoberkante (72) mit der in diesem Bereich zweckmäßigerweise komplementär geformten Trogwand (70) sicherstellt (s. Fig. 27).

Eine zusätzliche Arretierung bilden die beispielsweise an der Deckelunterseite (73) angeformten Mittel (64), z. B. in Form zweier, an den sich gegenüberliegenden Seiten mit Auswölbungen (77) ausgestatteten Zapfen, die in die zweckmäßigerweise im oberen Bereich der Ausprägungen (59) an den Troginnenwandungen (65) angebrachten Durchbrüche (60) einrasten (s. Fig. 27, 28).

Einzelne der ungefähr vertikal verlaufenden Ausprägungen (59) an den Troginnenwandungen (65) weisen vorteilhafterweise an ihrem inneren Ende Verbreiterungen (61) auf, die, wenn der Deckel in den Trog eingehängt wird, von den beispielsweise ebenfalls zapfenähnlichen, an ihren sich zugewandten Enden der Seiten mit Auswölbungen (75) versehenen Ausprägungen (74) umschlossen werden (s. Fig. 29).

## Patentansprüche

1. Kabelkanal aus Kanalelementen aus Kunststoff, wobei jedes Kanalelement einen U-förmigen Trog mit einem Trogboden (20) und einen ungefähr ebenen Deckel umfaßt, und wobei an einem Trogende der Trogboden (20) eine sich über diesen hinaus erstreckende Verlängerung (43) aufweist, welche in eine komplementäre Aufnahme (44) am Trogende (16) des nächstfolgenden Trogs in Eingriff bringbar ist.

2. Kabelkanal nach Anspruch 1
**dadurch gekennzeichnet, daß** die Verlängerung (43) am Trogboden (20) an einer Endrippe ohne Schloß (19) angeordnet ist.

3. Kabelkanal nach Anspruch 1 oder 2, **dadurch gekennzeichnet, daß** die Verlängerung (43) eine nicht dem Trogboden (20) entsprechende Dicke aufweist.

4. Kabelkanal nach einem der voranstehenden Ansprüche,
**dadurch gekennzeichnet, daß** die Verlängerung (43) über den Trogboden (20) horizontal hervorsteht.

5. Kabelkanal nach Anspruch 1,
**dadurch gekennzeichnet, daß** die der Verlängerung (43) am anderen Trogende entsprechende komplementäre Aufnahme (44) am Trogboden (20) an einer Endrippe (17) mit Schloß (15) angeordnet ist.

6. Kabelkanal nach einem der voranstehenden Ansprüche,
**dadurch gekennzeichnet, daß** das Kanalelement aus neuwertigen und recycelbaren Kunststoffen hergestellt ist.

7. Kabelkanal nach einem der Ansprüche 1 bis 5, **dadurch gekennzeichnet, daß** das Kanalelement aus recycelten und nochmals recycelbaren Kunststoffen hergestellt ist.

8. Kabelkanal nach einem der Ansprüche 1 bis 5, **dadurch gekennzeichnet, daß** das Kanalelement aus einer Mischung von recycelten und nochmals recycelbaren und neuwertigen recycelbaren Kunststoffen hergestellt ist.

9. Kabelkanal nach einem der vorangegangenen Ansprüche,
**dadurch gekennzeichnet, daß** das Kanalelement ungefähr gerade ist.

10. Kabelkanal nach einem der vorangegangenen Ansprüche,
**dadurch gekennzeichnet, daß** das Kanalelement einen in einer ersten Richtung verlaufenden, ersten Abschnitt und einen, in einer zweiten zur ersten Richtung in einem beliebig festlegbaren Winkel horizontal abgewinkelt verlaufenden zweiten Abschnitt aufweist, wobei eine Trogöffnung nach oben zeigt.

11. Kabelkanal nach einem der vorangegangenen Ansprüche,
**dadurch gekennzeichnet, daß** der Kabelkanal einen in einer ersten Richtung verlaufenden ersten Abschnitt und einen, in einer zweiten zur ersten Richtung in einem beliebig festlegbaren Winkel vertikal abgewinkelt verlaufenden zweiten Abschnitt aufweist, wobei die Trogöffnung nach oben zeigt.

12. Kabelkanal nach einem der vorangegangenen Ansprüche,
**dadurch gekennzeichnet, daß** der Trog an Außenwandungen (2) linienförmig angeordnete, beispielsweise nach oben gewölbte Trennführungslinien (3) in einem beliebig festlegbaren Winkel zur verbreiterten Trogoberkante (10) für eine nachträgliche Verkürzung des Troges aufweist, wobei die Trogöffnung nach oben zeigt.

13. Kabelkanal nach einem der vorangegangenen Ansprüche,
**dadurch gekennzeichnet, daß** der Trog z.B. an der Innenwandung (1) linienförmig angeordnete, beispielsweise eingekerbte Trennführungslinien (3) in einem beliebig festlegbaren Winkel zur verbreiterten Trogoberkante (10) für eine nachträgliche Verkürzung des Troges aufweist, wobei die Trogöffnung nach oben zeigt.

14. Kabelkanal nach einem der vorangegangenen Ansprüche,
**dadurch gekennzeichnet, daß** der Trog (1) an mindestens einer Innenwandung (1) mindestens ein ungefähr vertikal, in beliebiger Länge, verlaufendes z.B. schienenähnliches Profil (45) aufweist.

15. Kabelkanal nach Anspruch 14, **dadurch gekennzeichnet, daß** der Deckel (4) beispielsweise an seiner Unterseite (46) mindestens eine, dem an der Troginnenwandung befindlichen Profil, entsprechende Ausprägung (47) besitzt.

16. Kabelkanal nach Anspruch 15, **dadurch gekennzeichnet, daß** an der Deckelunterseite (46) z.B. punktuelle Erhöhungen (48) in beliebiger Anzahl und Form, jedoch mindestens in der gleichen Höhe wie die dort befindliche Ausprägung (47) vorgesehen sind.

17. Kabelkanal nach einem der vorangegangenen Ansprüche,
**dadurch gekennzeichnet, daß** eine Oberkante des Troges eine etwa horizontal nach außen verlaufende Verbreiterung (10) besitzt.

18. Kabelkanal nach Anspruch 17, **dadurch gekennzeichnet, daß** auf der verbreiterten Trogoberkante (10) Verlegerichtungspfeile (50) in Richtung des Schloßsystems (15) angebracht sind.

19. Kabelkanal nach Anspruch 17 oder 18, **dadurch gekennzeichnet, daß** die verbreiterte Trogoberkante (10) an ihrer Außenseite eine ungefähr vertikal nach unten verlaufende beliebig lange Verlängerung (42) besitzt.

20. Kabelkanal nach einem der Ansprüche 17 bis 19, **dadurch gekennzeichnet, daß** die verbreiterte Trogoberkante (10) Aussparungen (40) aufweist.

21. Kabelkanal nach Anspruch 20, **dadurch gekennzeichnet, daß** der Deckel an seiner ungefähr vertikalen Außenseite (6a) zu den Aussparungen (40) in der verbreiterten Trogoberkante (10) formkongruente insbesondere hakenförmige Profile (41) besitzt.

22. Kabelkanal nach einem der vorangegangenen Ansprüche,
**dadurch gekennzeichnet, daß** die verbreiterte Trogoberkante (10) Öffnungen mit Sicherungsclips (11) zur Aufnahme von Befestigungselementen (13) zur Verbindung der Tröge mit dem Erdreich aufweist.

23. Kabelkanal nach einem der vorangegangenen Ansprüche,
**dadurch gekennzeichnet, daß** der Trog beispielsweise an den Querrippen (7) unterhalb der Öffnungen mit Sicherungsclips (11) in der verbreiterten Trogoberkante (10) beliebig lange, ungefähr vertikal verlaufende, beispielsweise leistenähnliche, Führungshilfen (12) für die Befestigungselemente (13, 14) aufweist.

24. Kabelkanal nach Anspruch 23, **dadurch gekennzeichnet, daß** die Öffnungen mit Sicherungsclips (11) und Führungshilfen (12) mittels der Befestigungselemente (14) zur Verbindung nebeneinander liegender Tröge dienen.

25. Kabelkanal nach einem der Ansprüche 22 bis 24, **dadurch gekennzeichnet, daß** die Öffnungen mit Sicherungsclips (11) und Führungshilfen (12) mittels der Befestigungselemente (13) zur Verbindung übereinander liegender Tröge dienen.

26. Kabelkanal nach einem der vorangegangenen Ansprüche,
**dadurch gekennzeichnet, daß** der Trog an seinen Außenwandungen (2) mindestens zwei oder mehr, den Trog zumindest teilweise umschließende, Querrippen (7) aufweist.

27. Kabelkanal nach Anspruch 26, **dadurch gekennzeichnet, daß** die Querrippen (7) wenigstens eine Aussparung (8) haben.

28. Kabelkanal nach einem der vorangegangenen Ansprüche,
**dadurch gekennzeichnet, daß** der Trog an mindestens einer der Endrippen (17) ein bis maximal an die verbreiterte Trogoberkante (10) reichendes Schloßsystem (15) aufweist, das nach oben, unten und zur Trogmitte hin geöffnet ist.

29. Kabelkanal nach einem der vorangegangenen Ansprüche,
**dadurch gekennzeichnet, daß** an mindestens einer der beiden Wandungen des Trogs und/oder dem Trogboden (20) mindestens eine Ausbruchstelle (25) vorgesehen ist.

30. Kabelkanal nach einem der vorangegangenen Ansprüche,
**dadurch gekennzeichnet, daß** Trog und Deckel beispielsweise ein Schnappverschlußsystem aufweisen.

31. Kabelkanal nach einem der vorangegangenen Ansprüche,
**dadurch gekennzeichnet, daß** die Troginnenwandungen (1) im oberen Bereich des Troges eine versetzte Troginnenwandung aufweisen (37)

32. Kabelkanal nach Anspruch 30 oder 31, **dadurch gekennzeichnet, daß** im Bereich der inneren Seite der versetzten Troginnenwandung (37) vorzugsweise auf beiden Trogwandungen (9) mindestens ein konkaver Kreisabschnitt (38) für die Verbindung mit einem Deckel besteht, wodurch eine Voraussetzung für ein Schnappverschlußsystem gegeben ist.

33. Kabelkanal nach einem der Ansprüche 30 bis 32, **dadurch gekennzeichnet, daß** der Deckel des Trogs mindestens an einer der beiden Deckelaußenseiten (6a) einen dem konkaven Kreisabschnitt (38) des Troges entsprechenden konvexen Kreisabschnitt (39) aufweist und somit das Verschlußsystem komplettiert.

34. Kabelkanal nach einem der Ansprüche 30 bis 33, **dadurch gekennzeichnet, daß** an mindestens einer der beiden Trogwandungen (9) im Bereich der versetzten Troginnenwandungen (37) mindestens ein konvexer Kreisabschnitt (39) für die Verbindung mit einem Deckel besteht, wodurch eine Voraussetzung für ein Schnappverschlußsystem gegeben ist.

35. Kabelkanal nach einem der Ansprüche 30 bis 34, **dadurch gekennzeichnet, daß** der Deckel des Trogs mindestens an einer der beiden Deckelaußenseiten (6a) einen dem konvexen Kreisabschnitt (39) entsprechenden konkaven Kreisabschnitt (38) aufweist und somit das Schnappverschlußsystem komplettiert.

36. Kabelkanal nach einem der vorangegangenen Ansprüche,
**dadurch gekennzeichnet, daß** der Deckel ungefähr horizontal abgewinkelt ist, d.h. daß der Deckel einen in einer ersten Richtung verlaufenden ersten Abschnitt und einen in einer zweiten, zur ersten Richtung in einem beliebig festlegbaren Winkel verlaufenden zweiten Abschnitt aufweist.

37. Kabelkanal nach einem der vorangegangenen Ansprüche, **dadurch gekennzeichnet, daß** der Deckel ungefähr vertikal abgewinkelt ist, d.h., daß der Deckel einen in einer ersten Richtung verlaufenden ersten Abschnitt und einen in einer zweiten, zur ersten Richtung in einem beliebig festlegbaren Winkel verlaufenden zweiten Abschnitt aufweist.

38. Kabelkanal nach einem der vorangegangenen Ansprüche,
**dadurch gekennzeichnet, daß** der Deckel mindestens eine Entlüftungsöffnung (51) aufweist.

39. Kabelkanal nach einem der vorangegangenen Ansprüche,
**dadurch gekennzeichnet, daß** die Unterseite des Deckels (46) mindestens eine längs, quer oder schräg verlaufende Rippe (49) aufweist.

40. Kabelkanal nach einem der vorangegangenen Ansprüche,
**dadurch gekennzeichnet, daß** die Oberflächenstruktur des Deckels durch Trennführungslinien (4) charakterisiert ist.

41. Kabelkanal nach Anspruch 40,
**dadurch gekennzeichnet, daß** die Trennführungslinien (4) auf der Deckeloberseite (5) für Rutschsicherheit sorgen.

42. Kabelkanal nach Anspruch 40,
**dadurch gekennzeichnet, daß** die Trennführungslinien (4) in einem beliebig festzulegenden Winkel an der oberen Deckelaußenkante (6) über die Deckeloberfläche (5) verlaufen und nachträgliche Verkürzungen des Deckels ermöglichen.

43. Kabelkanal nach einem der vorangegangenen Ansprüche,
**dadurch gekennzeichnet, daß** das Kanalelement im Trogboden (20) eine ungefähr in Längsrichtung verlaufende Einkerbung (21) aufweist.

44. Kabelkanal nach Anspruch 43,
**dadurch gekennzeichnet, daß** die Einkerbung (21) am Boden (23) Durchbrüche (24) aufweist.

45. Kabelkanal nach Anspruch 43,
**dadurch gekennzeichnet, daß** die Einkerbung zur Aufnahme formkongruenter Trennelemente (22) dient.

46. Kabelkanal nach einem der vorangegangenen Ansprüche,
**dadurch gekennzeichnet, daß** der Trog mit mindestens einem Zusatzteil (27) verbindbar ist.

47. Kabelkanal nach Anspruch 46, **dadurch gekennzeichnet, daß** das Zusatzteil (27) entsprechende, quer zum Trog verlaufende Einkerbungen (30) zur Aufnahme der gleichverlaufenden Endrippen (17, 19) zweier Tröge aufweist.

48. Kabelkanal nach Anspruch 46 oder 47, **dadurch gekennzeichnet, daß** das Zusatzteil (27) Bohrungen (28) zur Verbindung mit den Bohrungen (26) im Trogboden (20) durch weitere Steckelemente (28) aufweist.

49. Kabelkanal nach einem der Ansprüche 46 bis 48, **dadurch gekennzeichnet, daß** das Zusatzteil (27) an seiner Unterseite (31) ein vieleckiges Profil (32) zum Aufsetzen auf einen vieleckigen Ständer (29) aufweist.

50. Kabelkanal nach Anspruch 49, **dadurch gekennzeichnet, daß** das Profil (32) an der Unterseite (31) des Zusatzteils (27) Bohrungen (58) zur Verbindung mit einem Ständer (29) aufweist.

51. Kabelkanal nach Anspruch 49 oder 50, **dadurch gekennzeichnet, daß** der Ständer (29) beispielsweise viereckig ist und durch seine Form mit dem Profil (32) an der Unterseite (31) des Zusatzteils (27) verbindbar ist.

52. Kabelkanal nach einem der Ansprüche 49 bis 51, **dadurch gekennzeichnet, daß** der Ständer (29) durch seine Form mit einem Profil (35) eines Ständerfußes (33) verbindbar ist.

53. Kabelkanal nach Anspruch 52, **dadurch gekennzeichnet, daß** der Ständerfuß (33) an seiner Oberseite ein der Ständerform entsprechendes Profil (35) mit Bohrlöchern (36) zur Verbindung mit dem Ständer (29) mit z.B. Steckelementen aufweist.

54. Kabelkanal nach einem der Ansprüche 46 bis 53, **dadurch gekennzeichnet, daß** ein Trägerprofil (52) dessen Länge größer ist als die der Tröge, zwischen dem Zusatzteil (27) und dem Trog eingefügt wird und durch Steckelemente durch die vorgesehenen Bohrlöcher (28, 53) im Zusatzteil (27) und in den Querrippen (7) kraftschlüssig verbunden wird.

55. Kabelkanal nach einem der vorangegangenen Ansprüche,
**dadurch gekennzeichnet, daß** die Trogwandungen (9) ausgehend von einem ungefähr horizontal verlaufenden Trogboden (20) zunächst ungefähr vertikal, dann ungefähr horizontal nach außen (55), dann wieder ungefähr vertikal (37) nach oben verlaufen.

56. Kabelkanal nach einem der vorangegangenen Ansprüche,
**dadurch gekennzeichnet, daß** die Trogwandungen (63) ausgehend von einem ungefähr horizontal verlaufenden Trogboden (20) ungefähr vertikal nach oben verlaufen.

57. Kabelkanal nach einem der vorangegangenen Ansprüche,
**dadurch gekennzeichnet, daß** an jeder der Troginnenwandungen (65) ungefähr von der Biegung des U-Profils ausgehend, ungefähr senkrecht zur Troginnenwandung (65) zunächst ungefähr vertikal nach oben verlaufende vorzugsweise einstückig angeformte Ausprägungen (59) angebracht sind, wobei diese Ausprägungen (59) noch unterhalb der Trogoberkante (72) ungefähr horizontal bis an die Troginnenwandung (65) verlaufen.

58. Kabelkanal nach Anspruch 57, **dadurch gekennzeichnet, daß** die Ausprägungen (59) an den Troginnenwandungen (65) beispielsweise in ihrem oberen Bereich Durchbrüche (60) aufweisen können.

59. Kabelkanal nach Anspruch 57 oder 58, **dadurch gekennzeichnet, daß** mindestens eine der Ausprägungen (59) an den Troginnenwandungen (65) nicht unbedingt über ihre gesamte Höhe an ihrem, z.B. zum Troginneren weisenden Ende, eine Verbreiterung (61) aufweist.

60. Kabelkanal nach einem der vorangegangenen Ansprüche,
**dadurch gekennzeichnet, daß** der Deckel auf den ungefähr horizontal (55) nach außen verlaufenden Trogwandungen (9) aufliegt und zwischen den ungefähr vertikal versetzten Troginnenseiten (37) liegt.

61. Kabelkanal nach einem der vorangegangenen Ansprüche,
**dadurch gekennzeichnet, daß** der Deckel auf Ausprägungen (59) an den Troginnenwandungen (65) aufliegt (62) und zwischen den ungefähr vertikal nach oben verlaufenden Trogwandungen (63) liegt.

62. Kabelkanal nach einem der vorangegangenen Ansprüche,
**dadurch gekennzeichnet, daß** an der Deckelunterseite (73) Mittel (64) zur Sicherung des Deckels angebracht sind, die in die Durchbrüche (60) z.B. im oberen Bereich der Ausprägungen (59) an den Troginnenwandungen (65) form- und kraftschlüssig eingreifen.

63. Kabelkanal nach einem der vorangegangenen Ansprüche,
**dadurch gekennzeichnet, daß** die Befestigungsmittel (67) z.B. an den Deckelaußenseiten (66) beispielsweise zunächst ungefähr horizontal nach außen und im Anschluß wieder in einem spitzen Winkel nach innen und unten in Richtung der Deckelaußenseite (66) verlaufen, ohne diese jedoch zu berühren, wobei z.B. auf der inneren Seite (68) im nach innen und unten verlaufenden Bereich beispielsweise eine Auswölbung (69) angebracht ist.

64. Kabelkanal nach einem der vorangegangenen Ansprüche,
**dadurch gekennzeichnet, daß** die Trogwand (70) im Bereich von Aussparungen (71) in der Verbreiterung der Trogoberkante (72) so geformt ist, daß sie die Auswölbung (69) an der Innenseite des nach innen und unten verlaufenden Bereichs des Befestigungsmittels (67) an den Deckelaußenseiten (66) form- und kraftschlüssig aufnimmt.

65. Kabelkanal nach einem der vorangegangenen Ansprüche,
**dadurch gekennzeichnet, daß** der Deckel an seiner Unterseite (73) beispielsweise zapfenähnliche, an ihren sich zugewandten Enden der Seiten z.B. mit Auswölbungen (75) versehene, Ausprägungen (74) aufweist, die die entsprechend geformte beispielsgemäße Verbreiterung (61) der Ausprägungen (59) an den Troginnenwandungen (65) umschließen.

66. Kabelkanal nach einem der vorangegangenen Ansprüche,
**dadurch gekennzeichnet, daß** der Kabelkanal wegen seiner Materialbeschaffenheit 100 %-ige Recycelbarkeit aufweist.

67. Kanalelement aus Kunststoff, umfassend einen U-förmigen Trog mit einem Trogboden (20) und einen ungefähr ebenen Deckel, **dadurch gekennzeichnet, daß** der Trogboden (20) an einem Trogende eine sich über diesen hinaus erstreckende Verlängerung (43) und am anderen Trogende (16) eine zur Verlängerung (43) komplementäre Aufnahme (44) aufweist, mit welcher die Verlängerung (43) eines vorausgehenden Trogs in Eingriff bringbar ist.

## Claims

1. Cable ducting made up of plastic ducting elements, wherein each ducting element comprises a U shaped trough with a base (20) and an approximately flat cover, and wherein the base (20) has an extension (43) projecting beyond it at one end of the trough, which extension can be engaged in a mating holder (44) at the end (16) of the next trough.

2. Cable ducting according to claim 1, **characterised in that** the extension (43) on the base (20) of the trough is arranged on an end rib without locking means (19).

3. Cable ducting according to claim 1 or 2, **characterised in that** the extension (43) has a thickness which does not correspond to the base (20) of the trough.

4. Cable ducting according to one of the preceding claims, **characterised in that** the extension (43) projects horizontally over the base (20) of the trough.

5. Cable ducting according to claim 1, **characterised in that** the mating holder (44) corresponding to the extension (43) at the other trough end is arranged on the base (20) on an end rib (17) with locking means (15).

6. Cable ducting according to one of the preceding claims, **characterised in that** the ducting element is produced from recyclable, as-new plastics.

7. Cable ducting according to one of claims 1 to 5, **characterised in that** the ducting element is produced from recycled plastics which can be recycled again.

8. Cable ducting according to one of claims 1 to 5, **characterised in that** the ducting element is produced from a mixture of recycled plastics which can be recycled again and recyclable, as-new plastics.

9. Cable ducting according to one of the preceding claims, **characterised in that** the ducting element is approximately straight.

10. Cable ducting according to one of the preceding claims, **characterised in that** the ducting element comprises a first section extending in a first direction, and a second section extending at any definable horizontal angle to the first direction, a trough aperture facing upwards.

11. Cable ducting according to one of the preceding claims, **characterised in that** the cable ducting comprises a first section extending in a first direction, and a second section extending at any definable vertical angle to the first direction, the trough aperture facing upwards.

12. Cable ducting according to one of the preceding claims, **characterised in that** external walls (2) of the trough have linearly arranged, e.g. upwardly bowd severing guidance lines (3) at any definable angle to the widened top edge (10) of the trough, for subsequent shortening of the trough, the trough aperture facing upwards.

13. Cable ducting according to one of the preceding claims, **characterised in that** the internal wall (1) for example of the trough has linearly arranged, e.g. notched severing guidance lines (3) at any definable angle to the widened top edge (10) of the trough, for subsequent shortening of the trough, the trough aperture facing upwards.

14. Cable ducting according to one of the preceding claims, **characterised in that** the trough (1) has at least one approximately vertical profile element (45) of any length, e.g. a rail-like profile element, on at least one internal wall (1).

15. Cable ducting according to claim 14, **characterised in that** the cover (4) has at least one stamped-out portion (47) corresponding to the profile element on the internal wall of the trough, e.g. on its underside (46).

16. Cable ducting according to claim 15, **characterised in that** for example punctiform elevations (48) are provided at the underside (46) of the cover in any number and form, but with at least the same height as the stamped-out portion (47) located there.

17. Cable ducting according to one of the preceding claims, **characterised in that** a top edge of the trough has a widened piece (10) extending approximately horizontally outwardly.

18. Cable ducting according to claim 17, **characterised in that** laying direction arrows (50) in the direction of the locking system (15) are marked on the widened top edge (10) of the trough.

19. Cable ducting according to claim 17 or 18, **characterised in that** the outside of the widened top edge (10) of the trough has an extension (42) of any length extending approximately vertically downwardly.

20. Cable ducting according to one of claims 17 to 19, **characterised in that** the widened top edge (10) of the trough has recesses (40).

21. Cable ducting according to claim 20, **characterised in that** the cover has profile elements (41) on its approximately vertical outside (6a), which are shaped congruently with the recesses (40) in the widened top edge (10) of the trough and in particular are hook-shaped.

22. Cable ducting according to one of the preceding claims, **characterised in that** the widened top edge (10) of the trough has openings with securing clips (11) to hold fastening members (13) for fixing the troughs to the ground.

23. Cable ducting according to one of the preceding claims, **characterised in that** the trough has guiding aids (12) for the fastening members (13, 14,) for example on the transverse ribs (7) below the apertures with securing clips (11) in the widened upper edge (10) of the trough, the guiding aids being of any length, extending approximately vertically and for example being slat-like.

24. Cable ducting according to claim 23, **characterised in that** the apertures with securing clips (11) and guiding aids (12) are used to join adjacent troughs by means of the fastening members (14).

25. Cable ducting according to one of claims 22 to 24, **characterised in that** the apertures with securing clips (11) and guiding aids (12) are used to join superimposed troughs by means of the fastening members (13).

26. Cable ducting according to one of the preceding claims, **characterised in that** the trough has at least two or more transverse ribs (7), at least partly surrounding it, on its external walls (2).

27. Cable ducting according to claim 26, **characterised in that** the transverse ribs (7) have at least one recess (8).

28. Cable ducting according to one of the preceding claims, **characterised in that** the trough has a locking system (15) on at least one of the end ribs (17), the locking system extending to the widened upper edge (10) of the trough at the maximum and being open upwardly, downwardly and towards the centre of the trough.

29. Cable ducting according to one of the preceding claims, **characterised in that** at least one break-out point (25) is provided on at least one of the two walls of the trough and/or the base (20) thereof.

30. Cable ducting according to one of the preceding claims, **characterised in that** the trough and cover may for example have a snap closure system.

31. Cable ducting according to one of the preceding claims, **characterised in that** the internal walls (1) of the trough have an offset inner wall (37) in the upper part of the trough.

32. Cable ducting according to claim 30 or 31, **characterised in that** there is at least one concave segment of a circle (38) for joining to a cover, in the region of the internal side of the offset internal wall (37) of the trough, preferably on both trough walls (9), thereby providing a prerequisite for a snap closure system.

33. Cable ducting according to one of claims 30 to 32, **characterised in that** the cover of the trough has a convex segment of a circle (39) matching the concave segment (38) of the trough, at least on one of its two external sides 6a, and thus completes the closure system.

34. Cable ducting according to one of claims 30 to 33, **characterised in that** there is at least one convex segment of a circle (39) for joining to a cover, on at least one of the two trough walls (9) in the region of the offset internal walls (37) of the trough, thereby providing a prerequisite for a snap closure system.

35. Cable ducting according to one of claims 30 to 34, **characterised in that** the cover of the trough has a concave segment of a circle (38) matching the convex segment (39) of the trough, at least on one of its two external sides (6a), and thus completes the snap closure system.

36. Cable ducting according to one of the preceding claims, **characterised in that** the cover is angled approximately horizontally, i.e. it has a first section extending in a first direction and a second section extending in a second direction at any definable angle to the first.

37. Cable ducting according to one of the preceding claims, **characterised in that** the cover is angled approximately vertically, i.e. it has a first section extending in a first direction and a second section extending in a second direction at any definable angle to the first.

38. Cable ducting according to one of the preceding claims, **characterised in that** the cover has at least one vent (51).

39. Cable ducting according to one of the preceding claims, **characterised in that** the underside of the cover (46) has at least one rib (49) running longitudinally, transversely or diagonally.

40. Cable ducting according to one of the preceding claims, **characterised in that** the surface structure of the cover is **characterised by** severing guidance lines (4).

41. Cable ducting according to claim 40, **characterised in that** the severing guidance lines (4) on the top (5) of the cover prevent slipping.

42. Cable ducting according to claim 40, **characterised in that** the severing guidance lines (4) run over the cover surface (5) at any definable angle to the upper external edge (6) of the cover, and permit subsequent shortening of the cover.

43. Cable ducting according to one of the preceding claims, **characterised in that** the ducting element in the base (20) of the trough has a notch (21) running approximately in a longitudinal direction.

44. Cable ducting according to claim 43, **characterised in that** the notch (21) in the base (23) contains apertures (24).

45. Cable ducting according to claim 43, **characterised in that** the notch is used to receive congruently shaped separating members (22).

46. Cable ducting according to one of the preceding claims, **characterised in that** the trough may be joined to at least one additional part (27).

47. Cable ducting according to claim 46, **characterised in that** the additional part (27) has matching notches (30), extending transversely of the trough, to receive the end ribs (17, 19) of two troughs extending in the same direction.

48. Cable ducting according to claim 46 or 47, **characterised in that** the additional part (27) has holes (28) for joining to the holes (26) in the base (20) of the trough by means of other insertable elements (28).

49. Cable ducting according to one of claims 46 to 48, **characterised in that** the additional part (27) has a polygonal profile element (32) on its underside (31), for placing on a polygonal stand (29).

50. Cable ducting according to claim (49), **characterised in that** the profile element (32) has holes (58) in the underside (31) of the additional part (27) for joining to a stand (29).

51. Cable ducting according to claim 49 or 50, **characterised in that** the stand (29) is, for example, rectangular and its shape enables it to be joined to the profile element (32) at the underside (31) of the additional part (27).

52. Cable ducting according to one of claims 49 to 51, **characterised in that** the shape of the stand (29) enables it to be joined to a profile element (35) of a foot (33) of a stand.

53. Cable ducting according to claim (52), **characterised in that** the top of the foot (33) of the stand has a profile element (35) matching the shape of the stand, with bore holes (36) for joining to the stand (29) e.g. by means of insertable elements.

54. Cable ducting according to one of claims 46 to 53, **characterised in that** a carrier profile element (52), the length of which is greater than that of the troughs, is introduced between the additional part (27) and the trough and non-positively connected by means of insertable elements, through the bore holes (28), (53) provided in the additional part (27) and the transverse ribs (7).

55. Cable ducting according to one of the preceding claims, **characterised in that** the trough walls (9), starting from an approximately horizontal trough base (20), extend first approximately vertically, then approximately horizontally outwardly (55), then again approximately vertically (37) upwardly.

56. Cable ducting according to one of the preceding claims, **characterised in that** the trough walls (63), starting from an approximately horizontal trough base (20), extend approximately vertically upwardly.

57. Cable ducting according to one of the preceding claims, **characterised in that** on each of the internal walls (65) of the trough, starting approximately from the bend in the U profile element and approximately normal to the internal wall (65), preferably integral stamped-out portions (59) are provided, first extending approximately vertically upwardly, these portions (59) extending approximately horizontally to the internal wall (65), still below the top edge (72) of the trough.

58. Cable ducting according to claim 57, **characterised in that** the stamped-out portions (59) on the internal walls (65) of the trough may have through holes (60), for example in their upper region.

59. Cable ducting according to claim 57 or 58, **characterised in that** at least one of the stamped-out portions (59) in the internal walls (65) of the trough has a widened part (61), for example at its end towards the interior of the trough, not necessarily over its whole height.

60. Cable ducting according to one of the preceding claims, **characterised in that** the cover rests on the trough walls (9) extending approximately horizontally (55) outwardly and is located between the internal sides (37) of the trough which are offset approximately vertically.

61. Cable ducting according to one of the preceding claims, **characterised in that** that the cover rests (62) on stamped-out portions (59) on the trough walls (65) and is located between the trough walls (63) which extend approximately vertically upwardly.

62. Cable ducting according to one of the preceding claims, **characterised in that** means (64) for securing the cover are mounted on its underside (73) and engage positively and non-positively in the through holes (60), for example in the upper part of the stamped-out portions (59) on the internal walls (65) of the trough.

63. Cable ducting according to one of the preceding claims, **characterised in that** the fastening means (67) e.g. at the external sides (66) of the cover may for example extend first approximately horizontally outwardly, then back at an acute angle inwardly and downwardly towards the outside (66) of the cover but without touching it, a bow (69) for example being provided e.g. at the internal side (68) in the region extending inwardly and downwardly.

64. Cable ducting according to one of the preceding claims, **characterised in that** the wall (70) of the trough is shaped, in the region of recesses (71) in the widened part of the top edge (72), so that it positively and non-positively receives the bow (69) inside the inwardly and downwardly extending region of the fastening means (67) at the external sides (66) of the cover.

65. Cable ducting according to one of the preceding claims, **characterised in that** the underside (73) of the cover may for example have peg-shaped stamped-out portions (74), provided e.g. with bows (75) at their interfacing ends of the sides, the stamped-out portions (74) surrounding the correspondingly shaped e.g. widened part (61) of the stamped-out portions (59) on the internal walls (65) of the trough.

66. Cable ducting according to one of the preceding claims, **characterised in that** it is 100% recyclable owing to the nature of its material.

67. A plastic ducting element comprising a U shaped trough with a trough base (20) and an approximately flat cover, **characterised in that** the base (20) has an extension (43) extending beyond it at one end of the trough, and a holder (44) mating with the extension (43) at the other end (16), the extension (43) of a preceding trough being engageable with the holder.

## Revendications

1. Caniveau de câbles composé d'éléments de caniveau en plastique, chaque élément de caniveau comprenant une cuve en forme de U avec un fond de cuve (20) et un couvercle approximativement plan, le fond de cuve (20) présentant sur une extrémité de cuve un prolongement (43) qui s'étend au-delà de celle-ci et peut être amené en prise dans un logement (44) complémentaire sur l'extrémité de cuve (16) de la cuve suivante.

2. Caniveau de câbles selon la revendication 1, **caractérisé en ce que** le prolongement (43) est disposé sur le fond de cuve (20) sur une nervure d'extrémité sans serrure (19).

3. Caniveau de câbles selon la revendication 1 ou 2, **caractérisé en ce que** le prolongement (43) présente une épaisseur qui ne correspond pas au fond de cuve (20).

4. Caniveau de câbles selon l'une quelconque des revendications précédentes, **caractérisé en ce que** le prolongement (43) déborde horizontalement du fond de cuve (20).

5. Caniveau de câbles selon la revendication 1, **caractérisé en ce que** le logement (44) complémentaire correspondant au prolongement (43) sur l'autre extrémité de cuve est disposé sur le fond de cuve (20) sur une nervure d'extrémité (17) avec serrure (15).

6. Caniveau de câbles selon l'une quelconque des revendications précédentes, **caractérisé en ce que** l'élément de caniveau est fabriqué à partir de plastiques à l'état neuf et recyclables.

7. Caniveau de câbles selon l'une quelconque des revendications 1 à 5, **caractérisé en ce que** l'élément de caniveau est fabriqué à base de plastiques recyclés et de plastiques encore recyclables.

8. Caniveau de câbles selon l'une quelconque des revendications 1 à 5, **caractérisé en ce que** l'élément de caniveau est fabriqué à base d'un mélange de plastiques recyclés, de plastiques encore recyclables et de plastiques recyclables et à l'état neuf.

9. Caniveau de câbles selon l'une quelconque des revendications précédentes, **caractérisé en ce que** l'élément de caniveau est à peu près droit.

10. Caniveau de câbles selon l'une quelconque des revendications précédentes, **caractérisé en ce que** l'élément de canal présente une première partie allant dans une première direction et une deuxième partie coudée horizontalement dans un angle quelconque par rapport à la première direction, une ouverture de cuve étant dirigée vers le haut.

11. Caniveau de câbles selon l'une quelconque des revendications précédentes, **caractérisé en ce que** le caniveau de câbles présente une première partie allant dans une première direction et une deukième partie coudée horizontalement dans un angle quelconque par rapport à la première direction, l'ouverture de cuve étant dirigée vers le haut.

12. Caniveau de câbles selon l'une quelconque des revendications précédentes, **caractérisé en ce que** la cuve présente sur des parois externes (2) des lignes de guidage de séparation (3) disposées en ligne, incurvées par exemple vers le haut, dans un angle définissable de façon quelconque par rapport au bord supérieur élargi de la cuvé (10), pour un raccourcissement ultérieur de la cuve, l'ouverture de la cuve étant dirigée vers le haut.

13. Caniveau de câbles selon l'une quelconque des revendications précédentes, **caractérisé en ce que** la cuve présente des lignes de guidage de séparation (3) disposées par exemple en forme de ligne sur la paroi interne (1), par exemple entaillées, dans un angle définissable de façon quelconque par rapport au bord supérieur élargi de la cuve (10) pour un raccourcissement ultérieur de la cuve, l'ouverture de la cuve étant dirigée vers le haut.

14. Caniveau de câbles selon l'une quelconque des revendications précédentes, **caractérisé en ce que** la cuve (1) présente sur au moins une paroi interne (1) au moins un profilé (45) allant à peu près dans le sens vertical, de longueur quelconque, ressemblant par exemple à un rail.

15. Caniveau de câbles selon la revendication 14, **caractérisé en ce que** le couvercle (4) présente par exemple sur sa face inférieure (46) au moins une empreinte (47) appropriée au profilé se trouvant sur la paroi interne de cuve.

16. Caniveau de câbles selon la revendication 15, **caractérisé en ce que** sur le côté inférieur du couvercle (46) sont prévues des élévations (48) ponctuelles par exemple, dans un nombre et une forme quelconques, mais au moins de la même hauteur que l'empreinte (47) se trouvant à cet endroit.

17. Caniveau de câbles selon l'une quelconque des revendications précédentes, **caractérisé en ce qu'**un bord supérieur de la cuve présente un élargissement (10) agencé à peu près horizontalement vers le haut.

18. Caniveau de câbles selon la revendication 17, **caractérisé en ce que** des flèches de sens de pose (50) sont disposées dans le sens du système de serrure (15) sur le bord supérieur élargi de la cuve (10).

19. Caniveau de câbles selon la revendication 17 ou 18, **caractérisé en ce que** le bord supérieur élargi de la cuve (10) présente sur son côté extérieur un prolongement (42) de longueur quelconque et allant à peu près verticalement vers le bas.

20. Caniveau de câbles selon l'une quelconque des revendications 17 à 19, **caractérisé en ce que** le bord supérieur élargi de la cuve (10) présente des évidements (40).

21. Caniveau de câbles selon la revendication 20, **caractérisé en ce que** le couvercle présente des profilés (41) congruents au niveau de la forme, en particulier en forme de crochets, sur son côté extérieur (6a) à peu près vertical pour les évidements (40) sur le bord supérieur élargi de la cuve (10).

22. Caniveau de câbles selon l'une quelconque des revendications précédentes, **caractérisé en ce que** le cors supérieur élargi de la cuve (10) présente des ouvertures avec des clips de sécurité (11) pour le logement d'éléments de fixation (13) pour la liaison des cuves avec la terre.

23. Caniveau de câbles selon l'une quelconque des revendications précédentes, **caractérisé en ce que** la cuve présente par exemple sur les nervures transversales (7) au-dessous des ouvertures avec des clips de sécurité (11) dans le bord supérieur élargi de la cuve (10) des aides de guidage (12) de longueur quelconque, à peu près verticaux, par exemple semblables à des baguettes, pour les éléments de fixation (13, 14).

24. Caniveau de câbles selon la revendication 23, **caractérisé en ce que** les ouvertures avec des clips de sécurité (11) et des aides de guidage (12) servent à la liaison de cuves juxtaposées au moyen des éléments de fixation (14).

25. Caniveau de câbles selon l'une quelconque des revendications 22 à 24, **caractérisé en ce que** les ouvertures avec des clips de sécurité (11) et des aides de guidage (12) servent à la liaison des cuves superposées au moyen des éléments de fixation (13).

26. Caniveau de câbles selon l'une quelconque des revendications précédentes, **caractérisé en ce que** la cuve présente sur ses parois externes (2) au moins deux nervures transversales (7) ou plus, qui entourent la cuve au moins partiellement.

27. Caniveau de câbles selon la revendication 26, **caractérisé en ce que** les nervures transversales (7) ont au moins un évidemment (8).

28. Caniveau de câbles selon l'une quelconque des revendications précédentes, **caractérisé en ce que** la cuve présente sur au moins l'une des nervures d'extrémité (17) un système de serrure (15) qui va au maximum jusqu'au bord supérieur élargi de la cuve (10) et est ouvert vers le haut, vers le bas et en direction du centre de la cuve.

29. Caniveau de câbles selon l'une quelconque des revendications précédentes, **caractérisé en ce qu'**au moins un endroit creusé (25) est prévu sur au moins l'une des deux parois de la cuve et/ou le fond de cuve (20).

30. Caniveau de câbles selon l'une quelconque des revendications précédentes, **caractérisé en ce que** la cuve et le couvercle présentent par exemple un système de fermeture à déclic.

31. Caniveau de câbles selon l'une quelconque des revendications précédentes, **caractérisé en ce que** les parois internes de paroi (1) présentent une paroi interne décalée de cuve (37) dans la zone supérieure de la cuve.

32. Caniveau de câbles selon la revendication 30 ou 31, **caractérisé en ce que**, dans la zone du côté intérieur de la paroi interne décalée de la cuve (37) et de préférence sur les deux parois de cuve (9), au moins une partie circulaire (38) concave est présente pour la liaison avec un couvercle, ce qui est une condition préalable à un système de fermeture à déclic.

33. Caniveau de câbles selon l'une quelconque des revendications 30 à 32, **caractérisé en ce que** le couvercle de la cuve présente sur au moins l'un des deux côtés extérieurs du couvercle (6a) une partie circulaire (39) convexe et appropriée à la partie circulaire (38) concave de la cuve et complète ainsi le système de fermeture.

34. Caniveau de câbles selon l'une quelconque des revendications 30 à 33, **caractérisé en ce que**, sur au moins l'une des deux parois internes de cuve (9) et dans la zone des parois internes décalées de la cuve (37), il y a au moins une partie circulaire (39) convexe pour la liaison avec un couvercle, ce qui est une condition préalable à un système de fermeture à déclic.

35. Caniveau de câbles selon l'une quelconque des revendications 30 à 34, **caractérisé en ce que** le couvercle de la cuve présente sur au moins l'un des deux côtés extérieurs du couvercle (6a) une partie circulaire (38) concave et appropriée à la partie circulaire (39) convexe et complète ainsi le système de fermeture à déclic.

36. Caniveau de câbles selon l'une quelconque des revendications précédentes, **caractérisé en ce que** le couvercle est coudé à peu près horizontalement, ce qui veut dire que le couvercle présente une première partie allant dans une première direction et une deuxième partie allant dans un angle définissable de façon quelconque par rapport à la première direction.

37. Caniveau de câbles selon l'une quelconque des revendications précédentes, **caractérisé en ce que** le couvercle est coudé à peu près verticalement, ce qui veut dire que le couvercle présente une première partie allant dans une direction et une deuxième partie formant un angle définissable de façon quelconque par rapport à la première direction.

38. Caniveau de câbles selon l'une quelconque des revendications précédentes, **caractérisé en ce que** le couvercle présente au moins une ouverture de ventilation (51).

39. Caniveau de câbles selon l'une quelconque des revendications précédentes, **caractérisé en ce que** le côté inférieur du couvercle (46) présente au moins une nervure (49) agencée de façon longitudinale, transversale ou inclinée.

40. Caniveau de câbles selon l'une quelconque des revendications précédentes, **caractérisé en ce que** la structure de surface du couvercle est **caractérisée par** des lignes de guidage de séparation (4).

41. Caniveau de câbles selon la revendication 40, **caractérisé en ce que** les lignes de guidage de séparation (4) sur le dessus du couvercle (5) assurent la sécurité antidérapage.

42. Caniveau de câbles selon la revendication 40, **caractérisé en ce que** les lignes de guidage de séparation (4) sont agencées en formant un angle à définir de façon quelconque sur le bord externe supérieur du couvercle (6) à la surface du couvercle (5) et permettent des raccourcissements ultérieurs du couvercle.

43. Caniveau de câbles selon l'une quelconque des revendications précédentes, **caractérisé en ce que** l'élément de caniveau présente dans le fond de cuve (20) une entaille (21) allant à peu près dans le sens longitudinal.

44. Caniveau de câbles selon la revendication 43, **caractérisé en ce que** l'entaille (21) présente des passages (24) sur le fond (23).

45. Caniveau de câbles selon la revendication 43, **caractérisé en ce que** l'entaille sert à loger des éléments de séparation (22) congruents au niveau de la forme.

46. Caniveau de câbles selon l'une quelconque des revendications précédentes, **caractérisé en ce que** la cuve peut être reliée à au moins une partie supplémentaire (27).

47. Caniveau de câbles selon la revendication 46, **caractérisé en ce que** la partie supplémentaire (27) présente des entailles (30) appropriées et transversales à la cuve pour le logement des nervures d'extrémité (17, 19), allant dans le même sens, de deux cuves.

48. Caniveau de câbles selon la revendication 46 ou 47, **caractérisé en ce que** la partie supplémentaire (27) présente des alésages (28) pour la liaison avec les alésages (26) dans le fond de cuve (20) dans d'autres éléments emboîtables (28).

49. Caniveau de câbles selon l'une quelconque des revendications 46 à 48, **caractérisé en ce que** la partie supplémentaire (27) présente sur sa face inférieure (31) un profilé (32) polygonal à poser sur un montant (29) polygonal.

50. Caniveau de câbles selon la revendication 49, **caractérisé en ce que** le profilé (32) présente sur le dessous (31) de la partie supplémentaire (27) des alésages (58) pour la liaison avec un montant (29).

51. Caniveau de câbles selon la revendication 49 ou 50, **caractérisé en ce que** le montant (29) est par exemple carré et, grâce à sa forme, peut être relié au profilé (32) sur le côté inférieur (31) de la partie supplémentaire (27).

52. Caniveau de câbles selon l'une quelconque des revendications 49 à 51, **caractérisé en ce que** le montant (29) peut être relié grâce à sa forme à un profilé (35) d'un pied de montant (33).

53. Caniveau de câbles selon la revendication 52, **caractérisé en ce que** le pied de montant (33) présente sur sa face supérieure un profilé (35) adapté à la forme du montant avec des trous de perçage (36) pour la liaison avec le montant (29), par exemple avec des éléments emboîtables.

54. Caniveau de câbles selon l'une quelconque des revendications 46 à 53, **caractérisé en ce qu'**un profilé de support (52), dont la longueur est supérieure) à celle des cuves, est inséré entre la partie supplémentaire (27) et la cuve et est relié par adhérence par des éléments emboîtables passés à travers les trous de perçage prévus (28, 53) dans la partie supplémentaire (27) et dans les nervures transversales (7).

55. Caniveau de câbles selon l'une quelconque des revendications précédentes, **caractérisé en ce que** les parois internes de cuve (9) s'étendent d'abord à peu près verticalement en partant d'un fond de cuve (20) à peu près horizontal, puis à peu près horizontalement vers l'extérieur (55) et ensuite à nouveau sensiblement verticalement (37) vers le haut.

56. Caniveau de câbles selon l'une quelconque des revendications précédentes, **caractérisé en ce que** les parois de cuve (63) partent d'un fond de cuve (20) agencé à peu près horizontalement et s'étendent à peu près verticalement vers le haut.

57. Caniveau de câbles selon l'une quelconque des revendications précédentes, **caractérisé en ce que** des empreintes (59) formées de préférence d'une seule pièce, partant à peu près de la pliure du profilé en U, s'étendant à peu près perpendiculairement à la paroi interne de la cuve (65) et d'abord sensiblement verticalement vers le haut, sont disposées sur chacune des parois internes de la cuve (65), ces empreintes (59) étant disposées encore au-dessous du bord supérieur de la cuve (72) à peu près horizontalement jusqu'à la paroi interne de la cuve (65).

58. Caniveau de câbles selon la revendication 57, **caractérisé en ce que** les empreintes (59) sur les parois internes de cuve (65) peuvent présenter des passages (60) par exemple dans leur zone supérieure.

59. Caniveau de câbles selon la revendication 57 ou 58, **caractérisé en ce qu'**au moins une des empreintes (59) sur les parois internes de cuve (65) ne présente pas forcément un élargissement (61) sur toute sa hauteur sur son extrémité dirigée par exemple vers l'intérieur de la cuve.

60. Caniveau de câbles selon l'une quelconque des revendications précédentes, **caractérisé en ce que** le couvercle repose sur les parois de cuve (9) s'étendant à peu près horizontalement (55) vers l'extérieur et est disposé entre les côtés intérieurs de cuve (37) décalés à peu près verticalement.

61. Caniveau de câbles selon l'une quelconque des revendications précédentes, **caractérisé en ce que** le couvercle repose sur des empreintes (59) sur les parois internes de cuve (65) et est disposé entre les parois de cuve allant à peu près verticalement vers le haut.

62. Caniveau de câbles selon l'une quelconque des revendications précédentes, **caractérisé en ce que** sur le dessous du couvercle (73) sont disposés des moyens (64) pour l'arrimage du couvercle qui s'engagent par conjugaison de forme et adhérence dans les passages (60) par exemple dans la zone supérieure des empreintes (59) sur les parois internes de cuve (65).

63. Caniveau de câbles selon l'une quelconque des revendications précédentes, **caractérisé en ce que** les moyens de fixation (67) sont disposés par exemple sur les côtés extérieurs du couvercle (66), par exemple d'abord à peu près horizontalement vers l'extérieur et ensuite à nouveau en formant un angle aigu vers l'intérieur et vers le bas en direction du côté extérieur du côuvercle (66), sans toucher celui-ci, une partie cintrée (69) étant disposée par exemple sur le côté intérieur (68) dans la zone allant vers l'intérieur et le bas.

64. Caniveau de câbles selon l'une quelconque des revendications précédentes, **caractérisé en ce que** la paroi de cuve (70) est formée dans la zone d'évidements (71) dans l'élargissement du bord supérieur (72) de telle façon qu'elle reçoit par conjugaison de forme et adhérence la partie cintrée (69) sur le côté intérieur de la zone, allant vers l'intérieur et vers le bas, du moyen de fixation (67) sur les côtés extérieurs du couvercle (66).

65. Caniveau de câbles selon l'une quelconque des revendications précédentes, **caractérisé en ce que** le couvercle présente sur son côté inférieur (73) des empreintes (74) par exemple en forme de tenons, dotées par exemple de parties cintrées (75) sur leurs extrémités, tournées vers eux, des côtés, lesquelles empreintes entourent l'élargissement (61), conforme à l'exemple et de forme appropriée, des empreintes (59) sur les parois internes de la cuve (65).

66. Caniveau de câbles selon l'une quelconque des revendications précédentes, **caractérisé en ce que** le caniveau de câbles présente une recyclabilité à 100% du fait de la nature de ses matériaux.

67. Elément de caniveau en plastique, comprenant une cuve en forme de U avec un fond de cuve (20) et un couvercle à peu près plan, **caractérisé en ce que** le fond de cuve (20) présente sur une extrémité de cuve un prolongement (43) s'étendant au-delà de ce fond et sur l'autre extrémité de cuve (16) un logement (44) complémentaire pour le prolongement (43), avec lequel le prolongement (43) d'une cuve antérieure peut être amené en prise.
